# EUROPEAN PATENT APPLICATION

(11) **EP 4 800 945 A1**
(43) Date of publication of application: **02.09.2026**
(21) Application number: 24893221.2
(22) Date of filing: 04.11.2024
(51) Int. Cl.: H04J 14/02, H04B 10/50

(54) **OPTICAL ASSEMBLY, CHIP, ACTIVE ANTENNA UNIT, BASE-BAND UNIT, BASE STATION, AND COMMUNICATION SYSTEM**

(30) Priority: 20.11.2023 CN 202311549794
(71) Applicant: Huawei Technologies Co., Ltd., Shenzhen, Guangdong 518129 (CN)
(72) Inventor: WU, Yangbo, Shenzhen, Guangdong 518129 (CN); LIU, Xiaowei, Shenzhen, Guangdong 518129 (CN); YANG, Rui, Shenzhen, Guangdong 518129 (CN); LI, Liang, Shenzhen, Guangdong 518129 (CN); YIN, Kun, Shenzhen, Guangdong 518129 (CN); WANG, Xingjun, Shenzhen, Guangdong 518129 (CN); ZHOU, Guangxing, Shenzhen, Guangdong 518129 (CN)
(74) Representative: Maiwald GmbH
(86) International application number: PCT/CN2024/129631
(87) International publication number: WO 2025/108063

(57) **Abstract**

This application provides an optical assembly, an active antenna unit, a baseband unit, and a communication system. An optical transmitting module, a plurality of optical receiving submodules, a multiplexing module, and a plurality of optical interfaces are used, so that the optical assembly is applicable to both CWDM networking and single-fiber bidirectional networking. The optical assembly may include the optical transmitting module, the plurality of optical receiving submodules, the multiplexing module, and the plurality of optical interfaces. The optical transmitting module may be configured to output a first optical signal and a second optical signal to the multiplexing module. The multiplexing module is configured to perform path switching for the first optical signal and the second optical signal, and transmit the first optical signal and the second optical signal to at least one optical interface. Any optical interface is configured to output the first optical signal and/or the second optical signal, or is configured to receive a third optical signal and/or a fourth optical signal and transmit the third optical signal and/or the fourth optical signal to the multiplexing module. The multiplexing module is further configured to: perform path switching for the third optical signal and transmit the third optical signal to a first optical receiving submodule; and perform path switching for the fourth optical signal and transmit the fourth optical signal to a second optical receiving submodule.

## Description

### TECHNICAL FIELD

This application relates to the field of optical communication technologies, and more specifically, to an optical assembly, a chip, an active antenna unit, a baseband unit, a base station, and a communication system.

### BACKGROUND

With rapid development of 5G communication systems, a quantity of base stations gradually increases. A base station may include an active antenna unit (active antenna unit, AAU) and a baseband unit (baseband unit, BBU). The AAU may include a first optical assembly, and the BBU may include a second optical assembly. The first optical assembly may be connected to the second optical assembly through an optical fiber. An optical assembly (the first optical assembly or the second optical assembly) may be used for coarse wavelength division multiplexing (coarse wavelength division multiplexing, CWDM) networking (which may be referred to as CWDM networking for short), dual-fiber bidirectional networking, single-fiber bidirectional (bidirectional, BiDi) networking, or the like. An optical module used for CWDM networking is called a colored optical assembly, and an optical assembly used for dual-fiber bidirectional networking is called a gray optical assembly. An optical assembly provided in the related technology may utilize a broadband frequency response characteristic of a photoelectric detector such as a photodiode (photodiode, PD), so that the optical assembly can be used for dual-fiber bidirectional networking, but the optical assembly is not applicable to single-fiber bidirectional networking.

Therefore, an optical assembly that is applicable to CWDM networking and single-fiber bidirectional networking is urgently required.

### SUMMARY

This application provides an optical assembly, an active antenna unit, a baseband unit, a base station, and a communication system. An optical transmitting module, a plurality of optical receiving submodules, a multiplexing module, and a plurality of optical interfaces are used, so that the optical assembly is applicable to both CWDM networking and single-fiber bidirectional networking.

According to a first aspect, this application provides an optical assembly. The optical assembly may include an optical transmitting module, a plurality of optical receiving submodules, a multiplexing module, and a plurality of optical interfaces. The optical transmitting module and each optical receiving submodule may be separately connected to the multiplexing module, and the multiplexing module may be connected to each optical interface.

Optionally, the optical transmitting module may be configured to output a first optical signal and a second optical signal to the multiplexing module.

The multiplexing module may be configured to perform path switching for the first optical signal and the second optical signal, and transmit the first optical signal and the second optical signal to at least one of the plurality of optical interfaces.

Any one of the plurality of optical interfaces may be configured to output the first optical signal and/or the second optical signal. Alternatively, any one of the plurality of optical interfaces may be configured to receive a third optical signal and/or a fourth optical signal and transmit the third optical signal and/or the fourth optical signal to the multiplexing module.

In other words, when the optical assembly is used as a transmit end, the first optical signal and the second optical signal may be output through a same optical interface or different optical interfaces. When the optical assembly is used as a receive end, the third optical signal and the fourth optical signal may be received and transmitted to the multiplexing module through a same optical interface or different optical interfaces.

The multiplexing module may be further configured to: perform path switching for the third optical signal and transmit the third optical signal to a first optical receiving submodule in the plurality of optical receiving submodules; and perform path switching for the fourth optical signal and transmit the fourth optical signal to a second optical receiving submodule in the plurality of optical receiving submodules.

It can be learned that the plurality of optical receiving submodules may include the first optical receiving submodule and the second optical receiving submodule. It may be understood that the third optical signal and the fourth optical signal received through the same optical interface may be transmitted to different optical receiving submodules (that is, the first optical receiving submodule and the second optical receiving submodule) through path switching of the multiplexing module. Certainly, the third optical signal and the fourth optical signal received through the different optical interfaces may also be transmitted to different optical receiving submodules through path switching of the multiplexing module.

It can be further learned that, according to the optical assembly provided in this application, the multiplexing module may be configured to output the first optical signal, the second optical signal, and a fifth optical signal through a same optical interface or different optical interfaces, and the multiplexing module may be further configured to transmit, to different optical receiving submodules, the third optical signal, the fourth optical signal, and a sixth optical signal received through a same optical interface or different optical interfaces.

According to the optical assembly provided in this application, the multiplexing module may be configured to perform path switching for the first optical signal and the second optical signal, so that the first optical signal and the second optical signal are output through the same optical interface or the different optical interfaces, and the multiplexing module may be further configured to perform path switching for the third optical signal and the fourth optical signal, so that the third optical signal and the fourth optical signal are transmitted to different optical receiving submodules. Therefore, the optical assembly provided in this application is applicable to CWDM networking, dual-fiber bidirectional networking, and single-fiber bidirectional networking. In other words, in comparison with the related technology, the optical assembly provided in this application has a wider range of applicability and stronger adaptability.

For example, the optical transmitting module may be further configured to output the fifth optical signal to the multiplexing module.

The multiplexing module may be further configured to perform path switching for the fifth optical signal and transmit the fifth optical signal to at least one of the plurality of optical interfaces.

Any one of the plurality of optical interfaces may be further configured to output the fifth optical signal. Alternatively, any one of the plurality of optical interfaces may be further configured to receive the sixth optical signal and transmit the sixth optical signal to the multiplexing module. In other words, when the optical assembly is used as a transmit end, the first optical signal, the second optical signal, and the fifth optical signal may be output through the same optical interface or the different optical interfaces. When the optical assembly is used as a receive end, the third optical signal, the fourth optical signal, and the sixth optical signal may be received and transmitted to the multiplexing module through the same optical interface or the different optical interfaces.

The multiplexing module may be further configured to perform path switching for the sixth optical signal and transmit the sixth optical signal to a third optical receiving submodule in the plurality of optical receiving submodules.

It can be learned that the plurality of optical receiving submodules may further include the third optical receiving submodule. It may be understood that the third optical signal, the fourth optical signal, and the sixth optical signal received through the same optical interface may be transmitted to different optical receiving submodules (that is, the first optical receiving submodule, the second optical receiving submodule, and the third optical receiving submodule) through path switching of the multiplexing module. Certainly, the third optical signal, the fourth optical signal, and the sixth optical signal received through the different optical interfaces may also be transmitted to different optical receiving submodules through path switching of the multiplexing module.

It can be learned that, according to the optical assembly provided in this application, the multiplexing module may be configured to output the first optical signal, the second optical signal, and the fifth optical signal through the same optical interface or the different optical interfaces, and the multiplexing module may be further configured to transmit, to different optical receiving submodules, the third optical signal, the fourth optical signal, and the sixth optical signal received through the same optical interface or the different optical interfaces.

Optionally, the optical transmitting module may include a first optical transmitting submodule and a second optical transmitting submodule. Alternatively, the optical transmitting module may include a first optical transmitting submodule, a second optical transmitting submodule, and a third optical transmitting submodule. The plurality of optical interfaces may include a first optical interface and a second optical interface. Alternatively, the plurality of optical interfaces may include a first optical interface, a second optical interface, and a third optical interface.

In a possible implementation, the multiplexing module may include a first optical switch, a second optical switch, a first optical interferometer, a second optical interferometer, a third optical interferometer, a fourth optical interferometer, and a fifth optical interferometer.

A first port of the first optical switch may be connected to the first optical transmitting submodule and is configured to receive the first optical signal. A second port of the first optical switch may be connected to a first port of the first optical interferometer, and a third port of the first optical switch may be connected to a first port of the second optical interferometer. A second port of the first optical interferometer may be connected to a fourth port of the fourth optical interferometer, and a third port of the first optical interferometer may be connected to the first optical interface. A second port of the second optical interferometer may be connected to the second optical transmitting submodule of the optical transmitting module and is configured to receive the second optical signal. A third port of the second optical interferometer may be connected to a first port of the fifth optical interferometer. A first port of the fourth optical interferometer may be connected to the first optical receiving submodule and is configured to transmit the third optical signal to the first optical receiving submodule. A second port of the fourth optical interferometer may be connected to the second optical receiving submodule and is configured to transmit the fourth optical signal to the second optical receiving submodule. A third port of the fourth optical interferometer may be connected to a first port of the third optical interferometer. A second port of the third optical interferometer may be connected to a second port of the fifth optical interferometer, and a third port of the third optical interferometer may be connected to a second port of the second optical switch. A third port of the fifth optical interferometer may be connected to a first port of the second optical switch, and a third port of the second optical switch may be connected to the second optical interface.

The multiplexing module may further include a third optical switch, a sixth optical interferometer, and a seventh optical interferometer.

A first port of the third optical switch may be connected to the third optical transmitting submodule and is configured to receive the fifth optical signal. A second port of the third optical switch may be connected to a first port of the seventh optical interferometer, and a third port of the third optical switch may be connected to a second port of the sixth optical interferometer. A first port of the sixth optical interferometer may be connected to the third port of the second optical interferometer, and a third port of the sixth optical interferometer may be connected to the first port of the fifth optical interferometer. A second port of the seventh optical interferometer may be connected to the third port of the third optical interferometer, a third port of the seventh optical interferometer may be connected to the third optical interface, and a fourth port of the seventh optical interferometer may be connected to the second port of the second optical switch. A fourth port of the third optical interferometer may be connected to the third optical receiving submodule and is configured to transmit the sixth optical signal to the third optical receiving submodule.

In another possible implementation, the multiplexing module may include a first optical switch, a second optical switch, a first optical interferometer, a second optical interferometer, a third optical interferometer, and a fourth optical interferometer.

A first port of the first optical switch may be connected to the second optical transmitting submodule and is configured to receive the second optical signal. A second port of the first optical switch may be connected to a first port of the second optical interferometer, and a third port of the first optical switch may be connected to a second port of the first optical interferometer. A first port of the first optical interferometer may be connected to the first optical transmitting submodule and is configured to receive the first optical signal. A third port of the first optical interferometer may be connected to a first port of the fourth optical interferometer. A second port of the second optical interferometer may be connected to a fourth port of the third optical interferometer, a third port of the second optical interferometer may be connected to the first optical interface in the plurality of optical interfaces, and a fourth port of the second optical interferometer may be connected to a second port of the second optical switch. A first port of the third optical interferometer may be connected to the first optical receiving submodule and is configured to transmit the third optical signal to the first optical receiving submodule. A second port of the third optical interferometer may be connected to the second optical receiving submodule and is configured to transmit the fourth optical signal to the second optical receiving submodule. A third port of the third optical interferometer may be connected to a second port of the fourth optical interferometer, a third port of the fourth optical interferometer may be connected to a first port of the second optical switch, and a third port of the second optical switch may be connected to the second optical interface in the plurality of optical interfaces.

The multiplexing module may further include a third optical switch, a fifth optical interferometer, a sixth optical interferometer, and a seventh optical interferometer.

A first port of the third optical switch may be connected to the third optical transmitting submodule and is configured to receive the fifth optical signal. A second port of the third optical switch may be connected to a first port of the fifth optical interferometer, and a third port of the third optical switch may be connected to a first port of the sixth optical interferometer. A second port of the fifth optical interferometer may be connected to a fourth port of the seventh optical interferometer, and a third port of the fifth optical interferometer may be connected to the third optical interface in the plurality of optical interfaces. A second port of the sixth optical interferometer may be connected to the first optical transmitting submodule of the optical transmitting module and is configured to receive the first optical signal. A third port of the sixth optical interferometer may be connected to the first port of the first optical interferometer. A first port of the seventh optical interferometer may be connected to the third optical receiving submodule and is configured to transmit the sixth optical signal to the third optical receiving submodule. A second port of the seventh optical interferometer may be connected to the second optical receiving submodule and is configured to transmit the fourth optical signal to the second optical receiving submodule. A third port of the seventh optical interferometer may be connected to the second port of the third optical interferometer.

In still another possible implementation, the multiplexing module may include a first optical switch, a second optical switch, a third optical switch, a first optical interferometer, a second optical interferometer, a third optical interferometer, a fourth optical interferometer, a fifth optical interferometer, and a sixth optical interferometer.

A first port of the first optical switch may be connected to the first optical transmitting submodule and is configured to receive the first optical signal. A second port of the first optical switch may be connected to a first port of the first optical interferometer, and a third port of the first optical switch may be connected to a first port of the third optical interferometer. A second port of the first optical interferometer may be connected to a fourth port of the sixth optical interferometer, and a third port of the first optical interferometer may be connected to the first optical interface in the plurality of optical interfaces.

A first port of the third optical switch may be connected to the second optical transmitting submodule and is configured to receive the second optical signal. A second port of the third optical switch may be connected to a first port of the second optical interferometer, and a third port of the third optical switch may be connected to a second port of the third optical interferometer. A second port of the second optical interferometer may be connected to a fourth port of the fifth optical interferometer, a third port of the second optical interferometer may be connected to the second optical interface in the plurality of optical interfaces, and a fourth port of the second optical interferometer may be connected to a second port of the second optical switch. A third port of the third optical interferometer may be connected to a first port of the fourth optical interferometer, a second port of the fourth optical interferometer may be connected to a third port of the fifth optical interferometer, and a third port of the fourth optical interferometer may be connected to a first port of the second optical switch. A third port of the second optical switch may be connected to the third optical interface in the plurality of optical interfaces. A first port of the fifth optical interferometer may be connected to the first optical receiving submodule and is configured to transmit the third optical signal to the first optical receiving submodule. A second port of the fifth optical interferometer may be connected to a second port of the sixth optical interferometer. A first port of the sixth optical interferometer may be connected to the second optical receiving submodule and is configured to transmit the fourth optical signal to the second optical receiving submodule.

The multiplexing module may further include a seventh optical interferometer. A first port of the seventh optical interferometer may be connected to the third port of the first optical switch. A second port of the seventh optical interferometer may be connected to the third optical transmitting submodule and is configured to receive the fifth optical signal. A third port of the seventh optical interferometer may be connected to the first port of the third optical interferometer.

Certainly, in addition to the structures described above, the multiplexing module may further have another structure to implement optical signal path switching. This is not limited in this application.

In an example, the first optical transmitting submodule and the second optical transmitting submodule each may include a laser. The laser may have a modulation function. Therefore, the laser may modulate an electrical signal into an optical signal (that is, the first optical signal or the second optical signal) and output the optical signal to the multiplexing module.

In another example, the first optical transmitting submodule and the second optical transmitting submodule each may include a continuous light source and a modulator. The continuous light source may emit a continuous optical carrier, and the modulator may modulate an electrical signal onto the continuous optical carrier to obtain an optical signal.

In still another example, the first optical transmitting submodule and the second optical transmitting submodule each may include a transmitter optical subassembly (transmitter optical subassembly, TOSA). The TOSA may convert an electrical signal into an optical signal (that is, the first optical signal, the second optical signal, or the fifth optical signal) and output the optical signal to the multiplexing module.

Certainly, the first optical transmitting submodule and the second optical transmitting submodule may alternatively output the first optical signal and the second optical signal in another manner. This is not limited in this application.

Optionally, each optical receiving submodule may include a receiver optical subassembly (receiver optical subassembly, ROSA). The ROSA may convert an optical signal (that is, the third optical signal, the fourth optical signal, or the sixth optical signal) into an electrical signal.

For example, the first optical signal has a first wavelength, the second optical signal has a second wavelength, the third optical signal has a third wavelength, the fourth optical signal has a fourth wavelength, the fifth optical signal has a fifth wavelength, and the sixth optical signal has a sixth wavelength.

Optionally, the first wavelength, the second wavelength, and the fifth wavelength are different from one another. In other words, wavelengths of optical signals output by the optical transmitting module are different.

In addition, the first wavelength, the second wavelength, the fifth wavelength, and the third wavelength are different from one another. The first wavelength, the second wavelength, the fifth wavelength, and the fourth wavelength are different from one another. The first wavelength, the second wavelength, the fifth wavelength, and the sixth wavelength are different from one another. In other words, the wavelengths of the optical signals output by the optical transmitting module are different from wavelengths of optical signals received through the plurality of optical interfaces.

According to a second aspect, this application provides a chip, where the chip may include the optical assembly provided in the first aspect and the possible implementations of the first aspect.

According to a third aspect, this application provides an active antenna unit (active antenna unit, AAU). The AAU may include the chip provided in the second aspect and the possible implementations of the second aspect.

According to a fourth aspect, this application provides a baseband unit (baseband unit, BBU). The BBU may include the chip provided in the second aspect and the possible implementations of the second aspect.

According to a fifth aspect, this application provides a base station. The base station includes the AAU provided in the third aspect and the possible implementations of the third aspect and the BBU provided in the fourth aspect and the possible implementations of the third aspect. The AAU may be connected to the BBU.

According to a sixth aspect, this application provides a communication system. The communication system includes a terminal device, a communication network, and the base station provided in the fifth aspect. The terminal device is connected to the base station via the communication network.

It should be understood that the technical solutions in the second aspect to the sixth aspect of this application are consistent with the technical solutions in the first aspect of this application, beneficial effects achieved by the aspects and corresponding feasible implementations are similar. Details are not described again.

### BRIEF DESCRIPTION OF DRAWINGS

To describe technical solutions in this application or in the conventional technology more clearly, the following briefly describes accompanying drawings for describing embodiments or the conventional technology. It is clear that the accompanying drawings in the following descriptions show some embodiments of this application, and a person of ordinary skill in the art may still derive other accompanying drawings from these accompanying drawings without creative efforts.
FIG. 1 is a diagram of a structure of an optical assembly 10 according to an embodiment of this application;
FIG. 2 is a diagram of another structure of an optical assembly 10 according to an embodiment of this application;
FIG. 3 is a diagram of still another structure of an optical assembly 10 according to an embodiment of this application;
FIG. 4 is a diagram of still another structure of an optical assembly 10 according to an embodiment of this application;
FIG. 5 is a diagram of still another structure of an optical assembly 10 according to an embodiment of this application;
FIG. 6 is a diagram of still another structure of an optical assembly 10 according to an embodiment of this application;
FIG. 7 is a diagram of still another structure of an optical assembly 10 according to an embodiment of this application;
FIG. 8 is a diagram of still another structure of an optical assembly 10 according to an embodiment of this application;
FIG. 9 is a diagram of still another structure of an optical assembly 10 according to an embodiment of this application;
FIG. 10 is a diagram of still another structure of an optical assembly 10 according to an embodiment of this application;
FIG. 11 is a diagram of still another structure of an optical assembly 10 according to an embodiment of this application;
FIG. 12 is a diagram of still another structure of an optical assembly 10 according to an embodiment of this application;
FIG. 13 is a diagram of still another structure of an optical assembly 10 according to an embodiment of this application;
FIG. 14 is a diagram of still another structure of an optical assembly 10 according to an embodiment of this application;
FIG. 15 is a diagram of still another structure of an optical assembly 10 according to an embodiment of this application;
FIG. 16 is a diagram of still another structure of an optical assembly 10 according to an embodiment of this application;
FIG. 17 is a diagram of still another structure of an optical assembly 10 according to an embodiment of this application;
FIG. 18 is a diagram of still another structure of an optical assembly 10 according to an embodiment of this application;
FIG. 19 is a diagram of still another structure of an optical assembly 10 according to an embodiment of this application;
FIG. 20 is a diagram of still another structure of an optical assembly 10 according to an embodiment of this application;
FIG. 21 is a diagram of still another structure of an optical assembly 10 according to an embodiment of this application;
FIG. 22 is a diagram of still another structure of an optical assembly 10 according to an embodiment of this application;
FIG. 23 is a diagram of still another structure of an optical assembly 10 according to an embodiment of this application;
FIG. 24 is a diagram of still another structure of an optical assembly 10 according to an embodiment of this application;
FIG. 25 is a diagram of still another structure of an optical assembly 10 according to an embodiment of this application;
FIG. 26 is a diagram of still another structure of an optical assembly 10 according to an embodiment of this application;
FIG. 27 is a diagram of still another structure of an optical assembly 10 according to an embodiment of this application; and
FIG. 28 is a diagram of still another structure of an optical assembly 10 according to an embodiment of this application.

### DESCRIPTION OF EMBODIMENTS

The following describes technical solutions of this application with reference to accompanying drawings.

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms "first", "second", and the like are merely intended for distinguishing and description, and shall not be understood as indicating or implying relative importance, or indicating or implying a sequence. In addition, terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that, in this application, "at least one (item)" means one or more, and "a plurality of" means two or more. "And/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of the items, including one of the items (pieces) or any combination of a plurality of items (pieces). For example, at least one of a, b, or c may indicate a, b, c, a and b, a and c, b and c, or a, b, and c, where a, b, and c may be singular or plural.

With rapid development of 5G communication systems, a quantity of base stations gradually increases. The base station may include an active antenna unit (active antenna unit, AAU) and a baseband unit (baseband unit, BBU). The BBU may include a central unit (central unit, CU) and a distributed unit (distributed unit, DU). Communication between the AAU and the DU is referred to as fronthaul, communication between the DU and the CU is referred to as midhaul, and communication between the CU and a core network is referred to as backhaul. The AAU may include a first optical module, and the DU may include a second optical module. The first optical module may be connected to the second optical module through an optical fiber. An optical module (the first optical module or the second optical module) may be used for coarse wavelength division multiplexing (coarse wavelength division multiplexing, CWDM) networking (which may be referred to as CWDM networking for short), dual-fiber bidirectional networking, single-fiber bidirectional (bidirectional, BiDi) networking, or the like. An optical module used for CWDM networking is referred to as a colored optical module, and an optical module used for dual-fiber bidirectional networking is referred to as a gray optical module. An optical module provided in the related technology may utilize a broadband frequency response characteristic of a photoelectric detector like a photodiode (photodiode, PD), so that the optical module can be used for dual-fiber bidirectional networking, but the optical module is not applicable to single-fiber bidirectional networking.

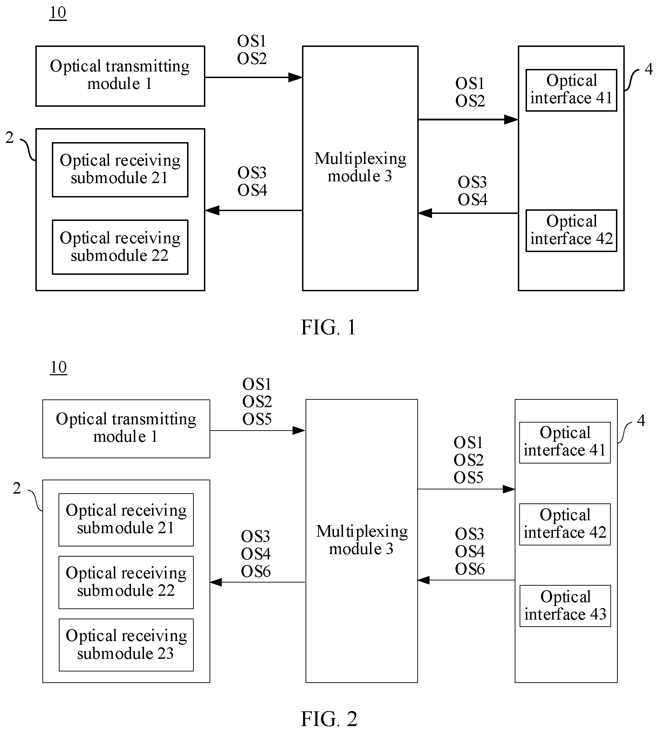

To overcome the foregoing disadvantage, an embodiment of this application provides an optical assembly, as shown in FIG. 1 and FIG. 2. The optical assembly 10 may be configured to transmit or receive an optical signal (optical signal, OS). In other words, the optical assembly 10 may be used as a transmit end or a receive end. The optical assembly 10 may include an optical transmitting module 1, a plurality of optical receiving submodules 2, a multiplexing module 3, and a plurality of optical interfaces 4. The optical transmitting module 1 and the plurality of optical receiving submodules 2 may be separately connected to the multiplexing module 3, and the multiplexing module 3 may be connected to each optical interface.

The following provides descriptions by using an example in which the plurality of optical receiving submodules 2 include two optical receiving submodules, and the plurality of optical interfaces 4 include two optical interfaces.

As shown in FIG. 1, the plurality of optical receiving submodules 2 may include an optical receiving submodule 21 (that is, a first optical receiving submodule) and an optical receiving submodule 22 (that is, a second optical receiving submodule), and the plurality of optical interfaces 4 may include an optical interface 41 (that is, a first optical interface) and an optical interface 42 (that is, a second optical interface).

Refer to FIG. 1. The optical transmitting module 1 may be configured to output an optical signal OS1 (that is, a first optical signal) and an optical signal OS2 (that is, a second optical signal) to the multiplexing module 3.

When the optical assembly 10 is used as a transmit end, the multiplexing module 3 may be configured to perform path switching for the optical signal OS1 and the optical signal OS2, and transmit the optical signal OS1 and the optical signal OS2 to at least one of the plurality of optical interfaces 4. In other words, after performing path switching for the optical signal OS1 and the optical signal OS2, the multiplexing module 3 may transmit the optical signal OS1 and the optical signal OS2 to one optical interface (for example, the optical interface 42) or more optical interfaces (for example, the optical interface 41 and the optical interface 42) in the plurality of optical interfaces 4.

When the optical assembly 10 is used as a transmit end, any optical interface (for example, the optical interface 42) may be configured to output the optical signal OS1 and/or the optical signal OS2. In other words, when the optical assembly 10 is used as a transmit end, the optical signal OS1 and the optical signal OS2 may be output through a same optical interface or different optical interfaces.

When the optical assembly 10 is used as a receive end, any optical interface (for example, the optical interface 42) may be configured to receive an optical signal OS3 (a third optical signal) and/or an optical signal OS4 (a fourth optical signal), and transmit the optical signal OS3 and/or the optical signal OS4 to the multiplexing module 3. In other words, when the optical assembly 10 is used as a receive end, the optical signal OS3 and the optical signal OS4 may be received and transmitted to the multiplexing module 3 through a same optical interface or different optical interfaces.

When the optical assembly 10 is used as a receive end, the multiplexing module 3 may be configured to: perform path switching for the optical signal OS3 and transmit the optical signal OS3 to the optical receiving submodule 21 (that is, the first optical receiving submodule); and perform path switching for the optical signal OS4 and transmit the optical signal OS4 to the optical receiving submodule 22 (that is, the second optical receiving submodule).

It can be learned that the optical signal OS3 and the optical signal OS4 received through the same optical interface may be transmitted to different optical receiving submodules through path switching of the multiplexing module 3. Certainly, the optical signal OS3 and the optical signal OS4 received through the different optical interfaces may also be transmitted to different optical receiving submodules through path switching of the multiplexing module 3.

According to the optical assembly 10 provided in FIG. 1 in this embodiment of this application, the multiplexing module 3 may be configured to perform path switching for the optical signal OS1 and the optical signal OS2, so that the optical signal OS1 and the optical signal OS2 are output through the same optical interface or the different optical interfaces, and the multiplexing module 3 may be further configured to perform path switching for the optical signal OS3 and the optical signal OS4, so that the optical signal OS3 and the optical signal OS4 are transmitted to different optical receiving submodules. Therefore, the optical assembly 10 is applicable to CWDM networking, dual-fiber bidirectional networking, and single-fiber bidirectional networking. In other words, in comparison with the related technology, the optical assembly 10 provided in this embodiment of this application has a wider range of applicability and stronger adaptability.

The following provides descriptions by using an example in which the plurality of optical receiving submodules 2 include three optical receiving submodules, and the plurality of optical interfaces 4 include three optical interfaces.

As shown in FIG. 2, the plurality of optical receiving submodules 2 may include an optical receiving submodule 21, an optical receiving submodule 22, and an optical receiving submodule 23 (that is, a third optical receiving submodule), and the plurality of optical interfaces 4 may include an optical interface 41, an optical interface 42, and an optical interface 43 (that is, a third optical interface).

Refer to FIG. 2. The optical transmitting module 1 may be configured to output an optical signal OS1, an optical signal OS2, and an optical signal OS5 (that is, a fifth optical signal) to the multiplexing module 3.

When the optical assembly 10 is used as a transmit end, the multiplexing module 3 may be configured to perform path switching for the optical signal OS1, the optical signal OS2, and the optical signal OS5, and transmit the optical signal OS1, the optical signal OS2, and the optical signal OS5 to at least one of the plurality of optical interfaces 4. In other words, after performing path switching for the optical signal OS1, the optical signal OS2, and the optical signal OS5, the multiplexing module 3 may transmit the optical signal OS1, the optical signal OS2, and the optical signal OS5 to one optical interface (for example, the optical interface 43) or more optical interfaces (for example, the optical interface 41, the optical interface 42, and the optical interface 43) in the plurality of optical interfaces 4.

When the optical assembly 10 is used as a transmit end, any optical interface (for example, the optical interface 43) may be configured to output at least one of the optical signal OS1, the optical signal OS2, or the optical signal OS5. In other words, when the optical assembly 10 is used as a transmit end, the optical signal OS1, the optical signal OS2, and the optical signal OS3 may be output through a same optical interface or different optical interfaces.

When the optical assembly 10 is used as a receive end, any optical interface (for example, the optical interface 43) may be configured to receive at least one of an optical signal OS3 (that is, a third optical signal), an optical signal OS4 (that is, a fourth optical signal), or an optical signal OS6 (that is, a sixth optical signal), and transmit the at least one optical signal to the multiplexing module 3. In other words, when the optical assembly 10 is used as a receive end, the optical signal OS3, the optical signal OS4, and the optical signal OS6 may be received and transmitted to the multiplexing module 3 through a same optical interface or different optical interfaces.

When the optical assembly 10 is used as a receive end, the multiplexing module 3 may be configured to: perform path switching for the optical signal OS3 and transmit the optical signal OS3 to the optical receiving submodule 21; perform path switching for the optical signal OS4 and transmit the optical signal OS4 to the optical receiving submodule 22; and perform path switching for the optical signal OS6 and transmit the optical signal OS6 to the optical receiving submodule 23 (that is, the third optical receiving submodule).

It can be learned that, according to the optical assembly 10 provided in this embodiment of this application, the multiplexing module 3 may be configured to output the optical signal OS1, the optical signal OS2, and the optical signal OS5 through the same optical interface or the different optical interfaces, and the multiplexing module 3 may be further configured to transmit, to different optical receiving submodules, the optical signal OS3, the optical signal OS4, and the optical signal OS6 received through the same optical interface or the different optical interfaces.

According to the optical assembly 10 provided in FIG. 2 in this embodiment of this application, the multiplexing module 3 may be configured to perform path switching for the optical signal OS1, the optical signal OS2, and the optical signal OS5, so that the optical signal OS1, the optical signal OS2, and the optical signal OS5 are output through the same optical interface or the different optical interfaces, and the multiplexing module 3 may be further configured to perform path switching for the optical signal OS3, the optical signal OS4, and the optical signal OS6, so that the optical signal OS3, the optical signal OS4, and the optical signal OS6 are transmitted to different optical receiving submodules. Therefore, the optical assembly 10 is applicable to CWDM networking, dual-fiber bidirectional networking, and single-fiber bidirectional networking. In other words, in comparison with the related technology, the optical assembly 10 provided in this embodiment of this application has a wider range of applicability and stronger adaptability.

For example, the optical signal OS1 may have a first wavelength, the optical signal OS2 may have a second wavelength, the optical signal OS3 may have a third wavelength, the optical signal OS4 may have a fourth wavelength, the optical signal OS5 may have a fifth wavelength, and the optical signal OS6 may have a sixth wavelength.

Optionally, the first wavelength, the second wavelength, and the fifth wavelength are different from one another. In other words, wavelengths of optical signals output by the optical transmitting module 1 are different.

In addition, the first wavelength, the second wavelength, the fifth wavelength, and the third wavelength are different from one another. The first wavelength, the second wavelength, the fifth wavelength, and the fourth wavelength are different from one another. The first wavelength, the second wavelength, the fifth wavelength, and the sixth wavelength are different from one another. In other words, the wavelengths of the optical signals output by the optical transmitting module 1 are different from wavelengths of optical signals received through the plurality of optical interfaces 4.

The following uses an optical transmitting submodule 11 and the optical receiving submodule 21 as an example for description.

The optical transmitting submodule 11 may include a laser. The laser may have a modulation function. Therefore, the laser may modulate an electrical signal into the optical signal OS1 and output the optical signal OS1.

In another example, the optical transmitting submodule 11 may include a continuous light source and a modulator. The continuous light source may emit a continuous optical carrier, and the modulator may modulate an electrical signal onto the continuous optical carrier to obtain an optical signal.

In still another example, the optical transmitting submodule 11 may include a transmitter optical subassembly (transmitter optical subassembly, TOSA). The TOSA may convert an electrical signal into the optical signal OS1 and output the optical signal OS1.

Certainly, the optical transmitting submodule 11 may alternatively output the optical signal OS1 in another manner. This is not limited in embodiments of this application.

The optical receiving submodule 21 may include a receiver optical subassembly (receiver optical subassembly, ROSA). The ROSA may convert the optical signal OS4 or the like into an electrical signal.

Optionally, the multiplexing module 3 may use an optical interferometer (optical interferometer) to implement optical signal path switching. Certainly, the multiplexing module 3 may alternatively be of another type, provided that the multiplexing module 3 can implement optical signal combining and wavelength division functions.

In this embodiment of this application, the optical interferometer may be a cascaded Mach-Zehnder interferometer (cascaded Mach-Zehnder interferometer, CMZI). Certainly, the optical interferometer may alternatively be of another type. This is not limited in embodiments of this application.

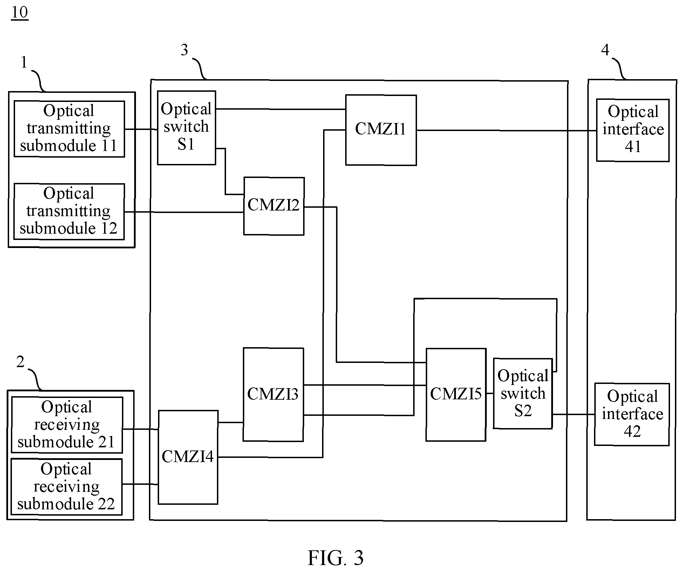

In some embodiments, as shown in FIG. 3, the multiplexing module 3 may include an optical switch S1 (that is, a first optical switch), an optical switch S2 (that is, a second optical switch), a CMZI1 (that is, a first optical interferometer), a CMZI2 (that is, a second optical interferometer), a CMZI3 (that is, a third optical interferometer), a CMZI4 (that is, a fourth optical interferometer), and a CMZI5 (that is, a fifth optical interferometer).

A first port of the optical switch S1 may be connected to the optical transmitting submodule 11 and is configured to receive the optical signal OS1. A second port of the optical switch S1 may be connected to a first port of the CMZI1, and a third port of the optical switch S1 may be connected to a first port of the CMZI2. A second port of the CMZI1 may be connected to a fourth port of the CMZI4, and a third port of the CMZI1 may be connected to the optical interface 41. A second port of the CMZI2 may be connected to an optical transmitting submodule 12 and is configured to receive the optical signal OS2. A third port of the CMZI2 may be connected to a first port of the CMZI5. A first port of the CMZI4 may be connected to the optical receiving submodule 21 and is configured to transmit the optical signal OS3 to the optical receiving submodule 21. A second port of the CMZI4 may be connected to the optical receiving submodule 22 and is configured to transmit the optical signal OS4 to the optical receiving submodule 22. A third port of the CMZI4 may be connected to a first port of the CMZI3. A second port of the CMZI3 may be connected to a second port of the CMZI5, and a third port of the CMZI3 may be connected to a second port of the optical switch S2. A third port of the CMZI5 may be connected to a first port of the optical switch S2, and a third port of the optical switch S2 may be connected to the optical interface 42.

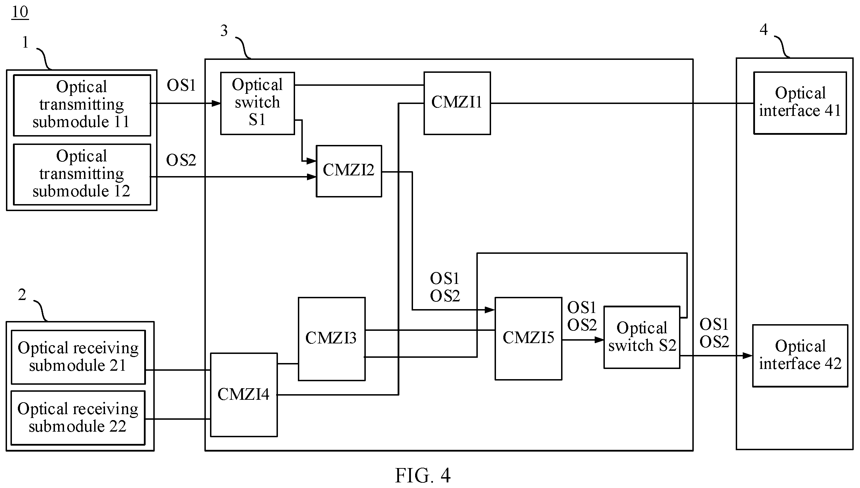

In an example, as shown in FIG. 4, when the optical assembly 10 is used for CWDM networking, and the optical assembly 10 is used as a transmit end, the optical switch S1 may transmit, to the CMZI2, the optical signal OS1 (which may have a wavelength of 1371 nm) output by the optical transmitting submodule 11. The CMZI2 may combine the optical signal OS2 (which may have a wavelength of 1331 nm) output by the optical transmitting submodule 12 and the optical signal OS1, and transmit the combined optical signal OS1 and optical signal OS2 to the CMZI5. The CMZI5 may transmit the optical signal OS1 and the optical signal OS2 to the optical interface 42 via the optical switch S2.

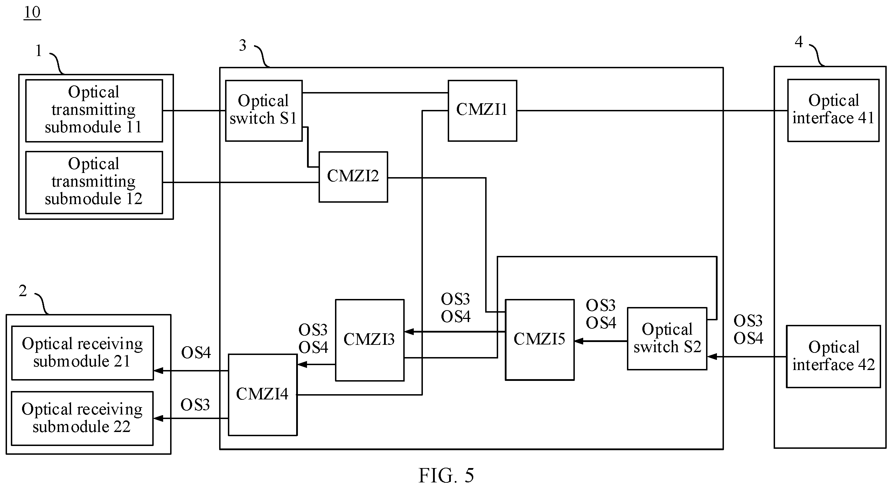

In another example, as shown in FIG. 5, when the optical assembly 10 is used for CWDM networking, and the optical assembly 10 is used as a receive end, the optical interface 42 may transmit the optical signal OS3 (which may have a wavelength of 1271 nm) and the optical signal OS4 (which may have a wavelength of 1291 nm) to the CMZI5 via the optical switch S2. The CMZI5 may transmit the optical signal OS3 and the optical signal OS4 to the CMZI4 via the CMZI3. The CMZI4 splits the optical signal OS3 and the optical signal OS4, transmits the split optical signal OS3 to the optical receiving submodule 22, and transmits the split optical signal OS4 to the optical receiving submodule 21.

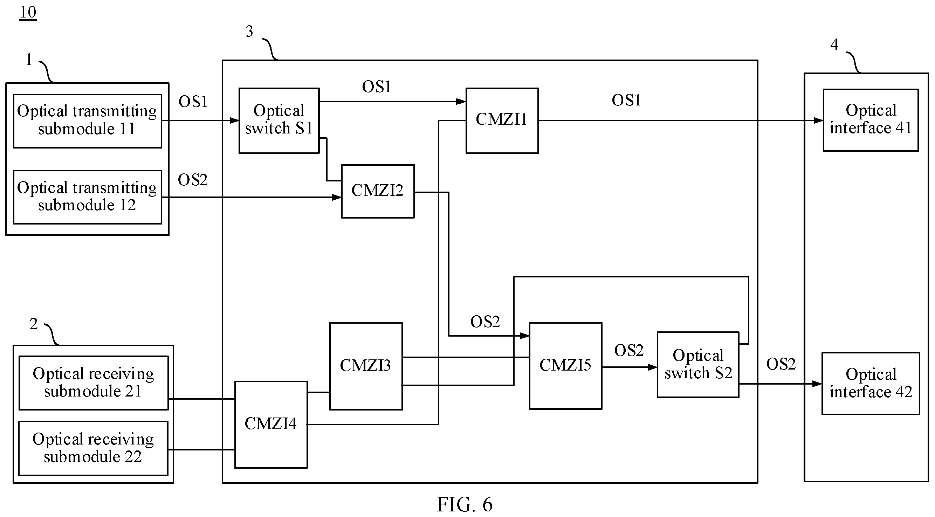

In still another example, as shown in FIG. 6, when the optical assembly 10 is used for single-fiber bidirectional networking, and the optical assembly 10 is used as a transmit end, the optical switch S1 may transmit, to the CMZI1, the optical signal OS1 (which may have a wavelength of 1371 nm) output by the optical transmitting submodule 11. The CMZI1 may transmit the optical signal OS1 to the optical interface 41 and transmit the optical signal OS1 through the optical interface 41. The CMZI2 may transmit, to the CMZI5, the optical signal OS2 (which may have a wavelength of 1331 nm) output by the optical transmitting submodule 12. The CMZI5 may transmit the optical signal OS2 to the optical interface 42 via the optical switch S2.

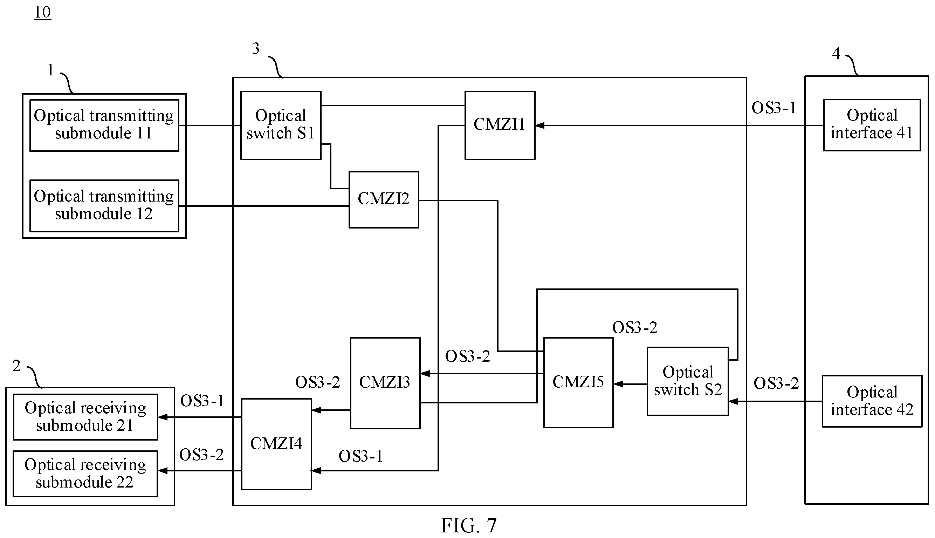

In still another example, as shown in FIG. 7, when the optical assembly 10 is used for single-fiber bidirectional networking, and the optical assembly 10 is used as a receive end, the optical interface 41 may transmit an optical signal OS3-1 (that is, an third optical signal which may have a wavelength of 1271 nm) to the CMZI4 via the CMZI1. The optical interface 42 may transmit another optical signal OS3-2 (that is, another third optical signal) to the CMZI5 via the optical switch S2. The CMZI5 may transmit the optical signal OS3-2 to the CMZI4 via the CMZI3. The CMZI4 may perform path switching for the optical signal OS3-1 and the optical signal OS3-2, transmit the optical signal OS3-1 to the optical receiving submodule 21, and transmit the optical signal OS3-2 to the optical receiving submodule 22.

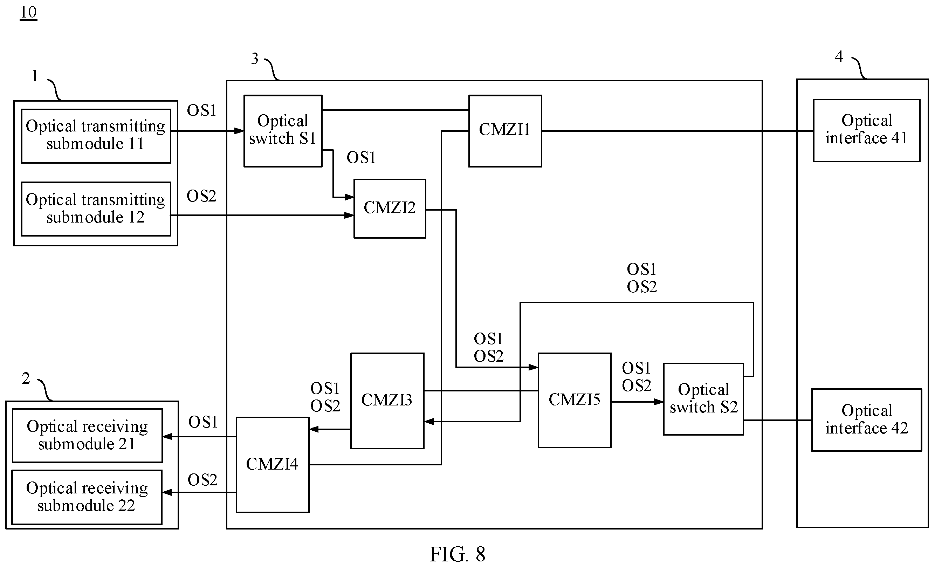

In still another example, as shown in FIG. 8, the optical assembly 10 may further operate in a loopback mode. The optical switch S1 may transmit, to the CMZI2, the optical signal OS1 output by the optical transmitting submodule 11. The CMZI2 may combine the optical signal OS2 output by the optical transmitting submodule 12 and the optical signal OS1, and transmit the combined optical signal OS1 and optical signal OS2 to the CMZI5. The CMZI5 may transmit the optical signal OS1 and the optical signal OS2 to the CMZI4 via the optical switch S2 and the CMZI3. The CMZI4 may split the optical signal OS1 and the optical signal OS2, transmit the split optical signal OS1 to the optical receiving submodule 21, and transmit the split optical signal OS2 to the optical receiving submodule 22. It can be learned that self-testing of the optical assembly 10 may be implemented in the loopback mode, to facilitate timely replacement of the optical assembly 10.

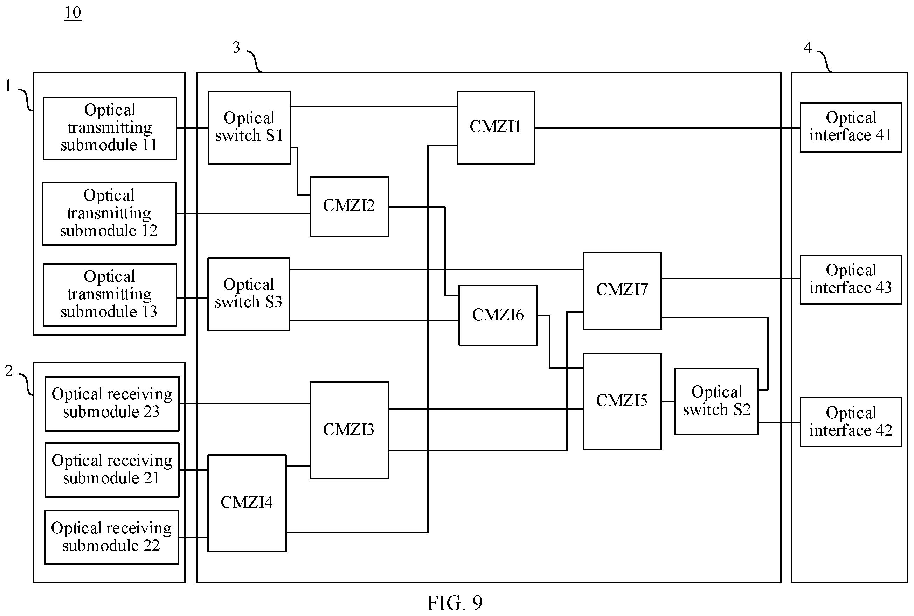

Based on FIG. 3, the optical transmitting module 1 may further include an optical transmitting submodule 13, the plurality of optical receiving submodules 2 may further include an optical receiving submodule 23, and the plurality of optical interfaces 4 may further include an optical interface 43, as shown in FIG. 9.

Refer to FIG. 9. The multiplexing module 3 may further include an optical switch S3 (that is, a third optical switch), a CMZI6 (that is, a sixth optical interferometer), and a CMZI7 (that is, a seventh optical interferometer).

A first port of the optical switch S3 may be connected to the optical transmitting submodule 13 and is configured to receive the optical signal OS5 (that is, the fifth optical signal). A second port of the optical switch S3 may be connected to a first port of the CMZI7, and a third port of the optical switch S3 may be connected to a second port of the CMZI6. A first port of the CMZI6 may be connected to the third port of the CMZI2, and a third port of the CMZI6 may be connected to the first port of the CMZI5. A second port of the CMZI7 may be connected to the third port of the CMZI3, a third port of the CMZI7 may be connected to the optical interface 43, and a fourth port of the CMZI7 may be connected to the second port of the optical switch S2. A fourth port of the CMZI3 may be connected to the optical receiving submodule 23 and is configured to transmit the optical signal OS6 to the optical receiving submodule 23.

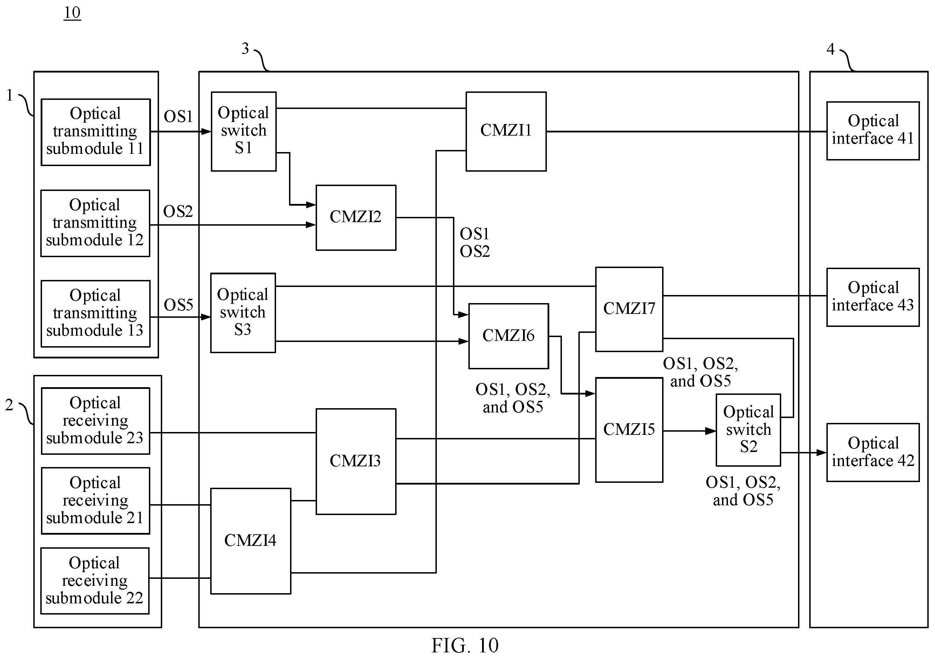

In an example, as shown in FIG. 10, when the optical assembly 10 is used for CWDM networking, and the optical assembly 10 is used as a transmit end, the optical switch S1 may transmit, to the CMZI2, the optical signal OS1 output by the optical transmitting submodule 11. The CMZI2 may combine the optical signal OS2 output by the optical transmitting submodule 12 and the optical signal OS1, and transmit the combined optical signal OS1 and optical signal OS2 to the CMZI6. The optical switch S3 may transmit the optical signal OS5 (which may have a wavelength of 1351 nm) to the CMZI6. The CMZI6 may combine the optical signal OS1, the optical signal OS2, and the optical signal OS5, and transmit the combined optical signal OS1, optical signal OS2, and optical signal OS5 to the CMZI5. The CMZI5 may transmit the optical signal OS1, the optical signal OS2, and the optical signal OS5 to the optical interface 42 via the optical switch S2.

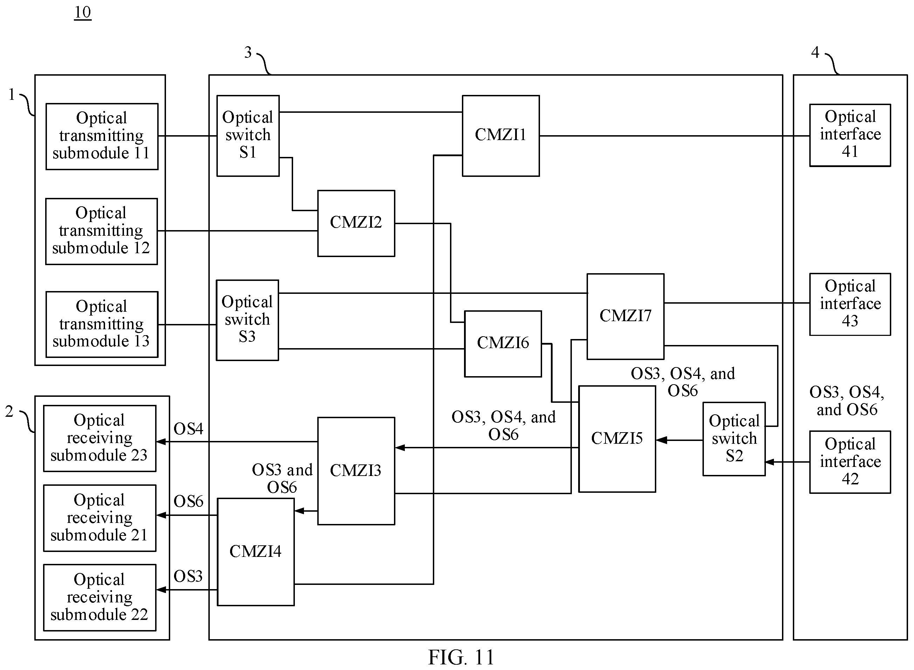

In another example, as shown in FIG. 11, when the optical assembly 10 is used for CWDM networking, and the optical assembly 10 is used as a receive end, the optical interface 42 may transmit the optical signal OS3, the optical signal OS4, and the optical signal OS6 (which may have a wavelength of 1311 nm) to the CMZI3 via the optical switch S2 and the CMZI5. The CMZI3 may split the optical signal OS3, the optical signal OS4, and the optical signal OS6, transmit the split optical signal OS4 to the optical receiving submodule 23, and transmit the split optical signal OS3 and optical signal OS6 to the CMZI4. The CMZI4 may split the optical signal OS3 and the optical signal OS6, transmit the split optical signal OS3 to the optical receiving submodule 22, and transmit the split optical signal OS6 to the optical receiving submodule 21.

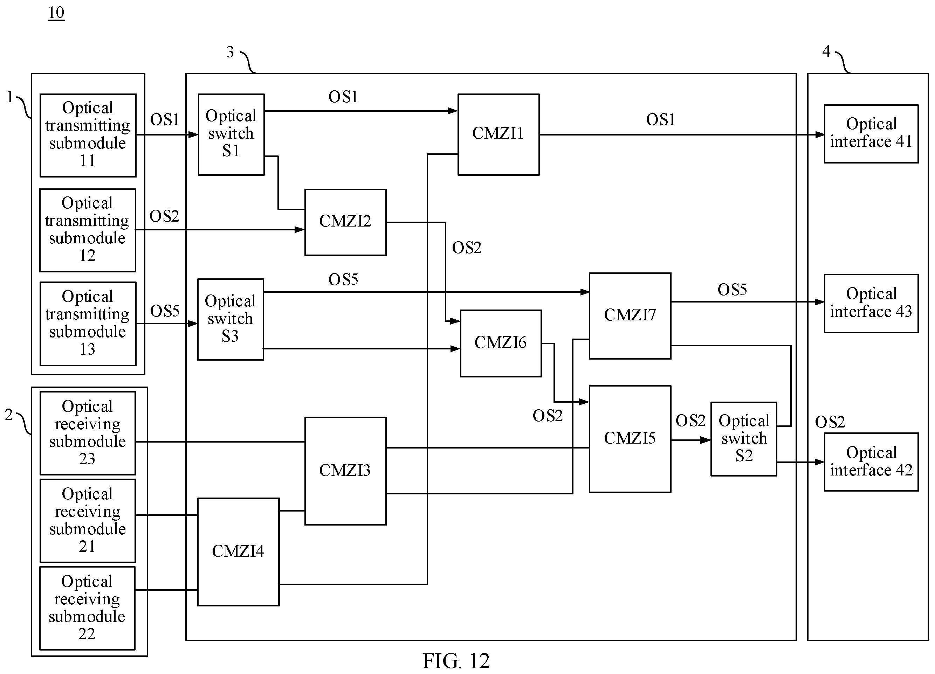

In still another example, as shown in FIG. 12, when the optical assembly 10 is used for single-fiber bidirectional networking, and the optical assembly 10 is used as a transmit end, the optical switch S1 may transmit, to the optical interface 41 via the CMZI1, the optical signal OS1 output by the optical transmitting submodule 11. The CMZI2 may transmit, to the optical interface 42 via the CMZI6, the CMZI5, and the optical switch S2, the optical signal OS2 output by the optical transmitting submodule 12. The optical switch S3 may transmit, to the optical interface 43 via the CMZI7, the optical signal OS5 output by the optical transmitting submodule 13.

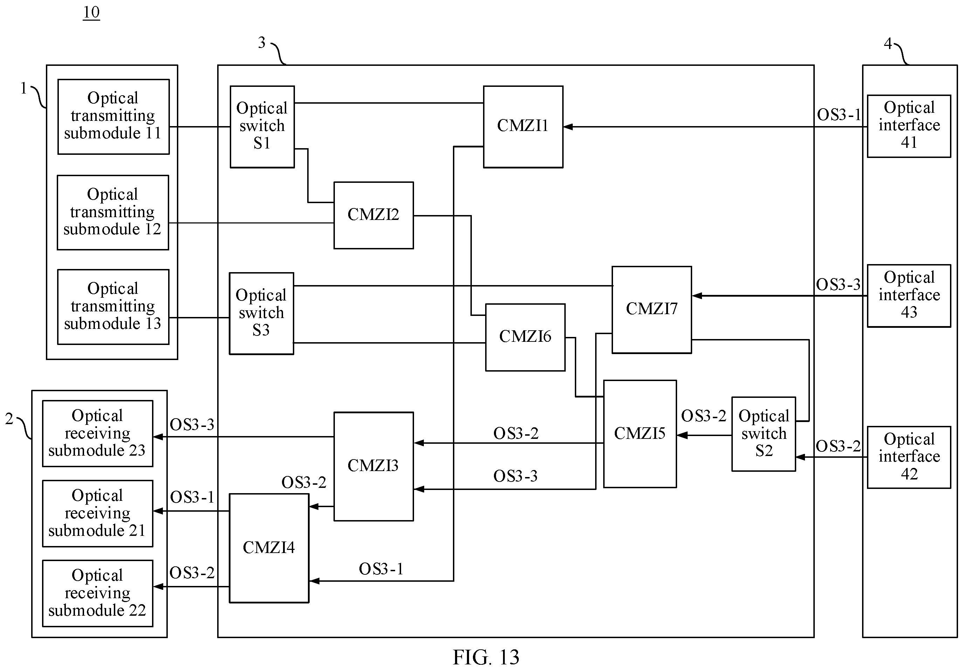

In still another example, as shown in FIG. 13, when the optical assembly 10 is used for single-fiber bidirectional networking, and the optical assembly 10 is used as a receive end, the optical interface 41 may transmit an optical signal OS3-1 (that is, a third optical signal) to the CMZI4 via the CMZI1. The optical interface 42 may transmit another optical signal OS3-2 (that is, another third optical signal) to the CMZI3 via the optical switch S2 and the CMZI5. The optical interface 43 may transmit still another optical signal OS3-3 (that is, still another third optical signal) to the CMZI3 via the CMZI7. The CMZI3 may split the optical signal OS3-2 and the optical signal OS3-3, transmit the optical signal OS3-2 to the CMZI4, and transmit the optical signal OS3-3 to the optical receiving submodule 23. The CMZI4 may split the optical signal OS3-1 and the optical signal OS3-2, transmit the optical signal OS3-1 to the optical receiving submodule 21, and transmit the optical signal OS3-2 to the optical receiving submodule 22.

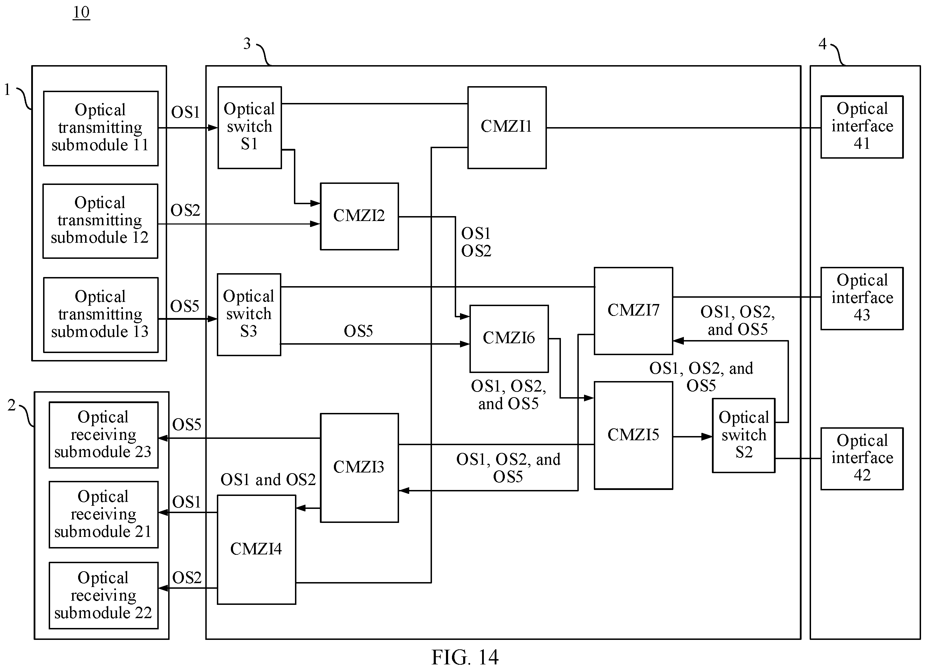

In still another example, as shown in FIG. 14, the optical assembly 10 may further operate in a loopback mode. The optical switch S1 may transmit, to the CMZI2, the optical signal OS1 output by the optical transmitting submodule 11. The CMZI2 may combine the optical signal OS2 output by the optical transmitting submodule 12 and the optical signal OS1, and transmit the combined optical signal OS1 and optical signal OS2 to the CMZI6. The optical switch S3 may transmit, to the CMZI6, the optical signal OS5 output by the optical transmitting submodule 13. The CMZI6 may transmit the optical signal OS1, the optical signal OS2, and the optical signal OS5 to the CMZI3 via the CMZI5, the optical switch S2, and the CMZI7. The CMZI3 may split the optical signal OS1, the optical signal OS2, and the optical signal OS5, transmit the optical signal OS1 and the optical signal OS2 to the CMZI4, and transmit the optical signal OS5 to the optical receiving submodule 23. The CMZI4 may split the optical signal OS1 and the optical signal OS2, transmit the split optical signal OS1 to the optical receiving submodule 21, and transmit the split optical signal OS2 to the optical receiving submodule 22. It can be learned that self-testing of the optical assembly 10 may be implemented in the loopback mode, to facilitate timely replacement of the optical assembly 10.

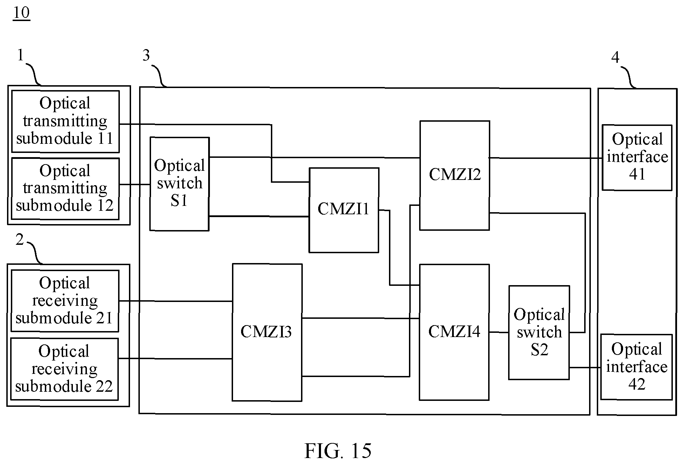

In some other embodiments, as shown in FIG. 15, the multiplexing module 3 may include an optical switch S1, an optical switch S2, a CMZI1, a CMZI2, a CMZI3, and a CMZI4.

Optionally, a first port of the optical switch S1 may be connected to the optical transmitting submodule 12 and is configured to receive the optical signal OS2. A second port of the optical switch S1 may be connected to a first port of the CMZI2, and a third port of the optical switch S1 may be connected to a second port of the CMZI1. A first port of the CMZI1 may be connected to the optical transmitting submodule 11 and is configured to receive the optical signal OS1. A third port of the CMZI1 may be connected to a first port of the CMZI4. A second port of the CMZI2 may be connected to a fourth port of the CMZI3, a third port of the CMZI2 may be connected to the optical interface 41, and a fourth port of the CMZI2 may be connected to a second port of the optical switch S2. A first port of the CMZI3 may be connected to the optical receiving submodule 21 and is configured to transmit the optical signal OS3 to the optical receiving submodule 21. A second port of the CMZI3 may be connected to the optical receiving submodule 22 and is configured to transmit the optical signal OS4 to the optical receiving submodule 22. A third port of the CMZI3 may be connected to a second port of the CMZI4, a third port of the CMZI4 may be connected to a first port of the optical switch S2, and a third port of the optical switch S2 may be connected to the optical interface 42.

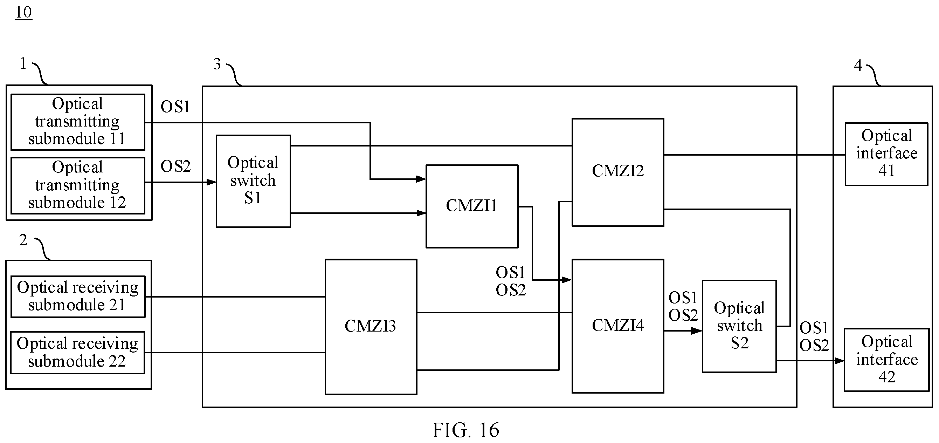

In an example, as shown in FIG. 16, when the optical assembly 10 is used for CWDM networking, and the optical assembly 10 is used as a transmit end, the optical switch S1 may transmit, to the CMZI1, the optical signal OS2 (which may have a wavelength of 1351 nm) output by the optical transmitting submodule 12. The CMZI1 may combine the optical signal OS1 (which may have a wavelength of 1331 nm) output by the optical transmitting submodule 11 and the optical signal OS2, and transmit the combined optical signal OS1 and optical signal OS2 to the CMZI4. The CMZI4 may transmit the optical signal OS1 and the optical signal OS2 to the optical interface 42 via the optical switch S2.

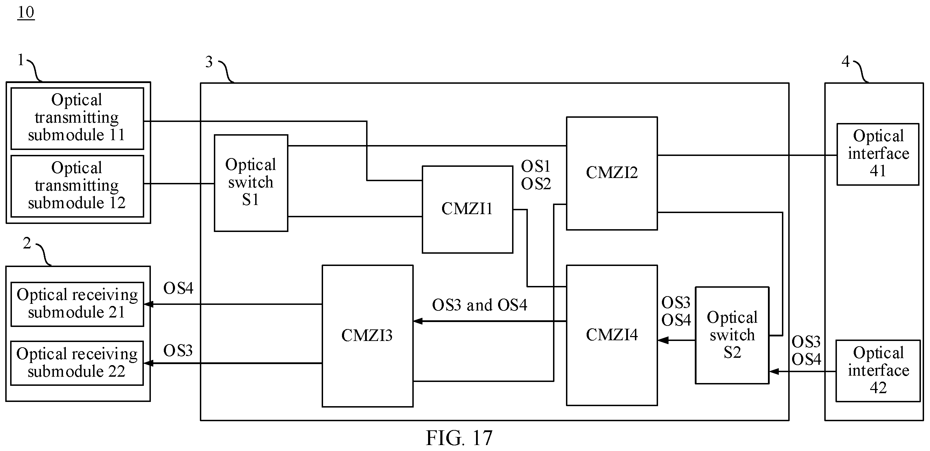

In another example, as shown in FIG. 17, when the optical assembly 10 is used for CWDM networking, and the optical assembly 10 is used as a receive end, the optical switch S2 may transmit the optical signal OS3 (which may have a wavelength of 1271 nm) and the optical signal OS4 (which may have a wavelength of 1291 nm) to the CMZI3 via the CMZI4. The CMZI3 may split the optical signal OS3 and the optical signal OS4, transmit the split optical signal OS3 to the optical receiving submodule 22, and transmit the split optical signal OS4 to the optical receiving submodule 21.

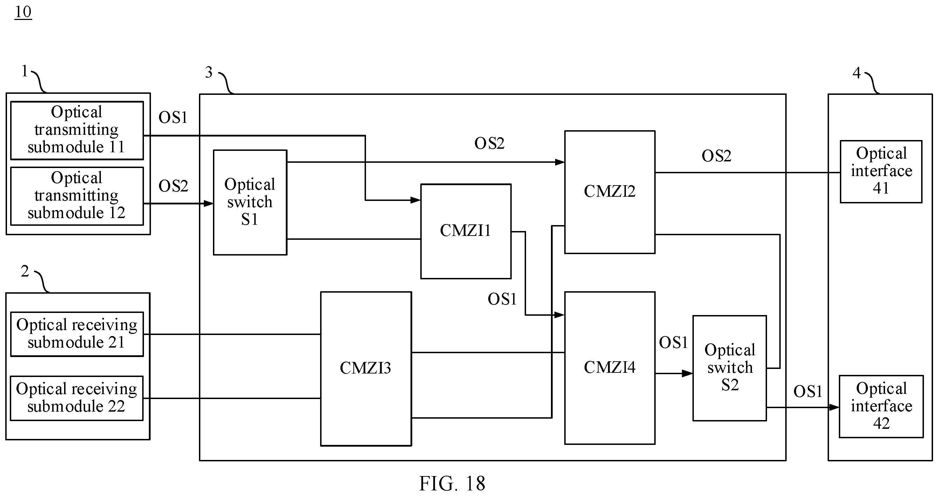

In still another example, as shown in FIG. 18, when the optical assembly 10 is used for single-fiber bidirectional networking, and the optical assembly 10 is used as a transmit end, the optical switch S1 may transmit, to the optical interface 41 via the CMZI2, the optical signal OS2 (which may have a wavelength of 1351 nm) output by the optical transmitting submodule 12. The CMZI1 may transmit, to the optical interface 42 via the CMZI4 and the optical switch S2, the optical signal OS1 (which may have a wavelength of 1331 nm) output by the optical transmitting submodule 11.

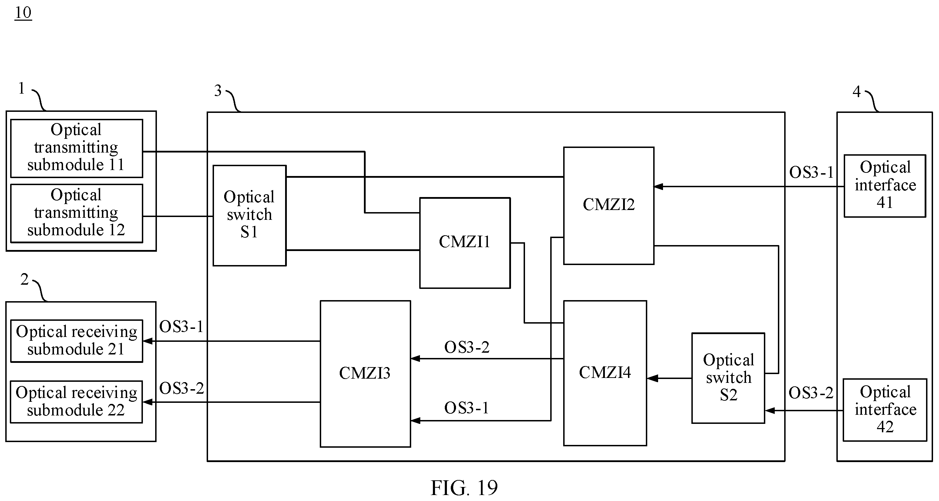

In still another example, as shown in FIG. 19, when the optical assembly 10 is used for single-fiber bidirectional networking, and the optical assembly 10 is used as a receive end, the optical interface 41 may transmit an optical signal OS3-1 (that is, a third optical signal which may have a wavelength of 1271 nm) to the CMZI3 via the CMZI2. The optical interface 42 may transmit another optical signal OS3-2 (that is, another third optical signal) to the CMZI3 via the optical switch S2 and the CMZI4. The CMZI3 may perform path switching for the optical signal OS3-1 and the optical signal OS3-2, transmit the optical signal OS3-1 to the optical receiving submodule 21, and transmit the optical signal OS3-2 to the optical receiving submodule 22.

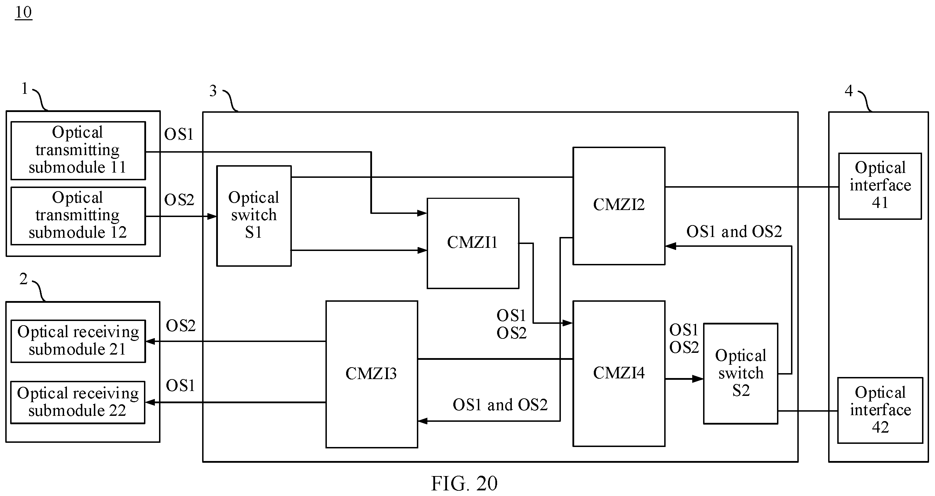

In still another example, as shown in FIG. 20, the optical assembly 10 may further operate in a loopback mode. The optical switch S1 may transmit, to the CMZI1, the optical signal OS2 (which may have a wavelength of 1351 nm) output by the optical transmitting submodule 12. The CMZI1 may combine the optical signal OS1 (which may have a wavelength of 1331 nm) output by the optical transmitting submodule 11 and the optical signal OS2, and transmit the combined optical signal OS1 and optical signal OS2 to the CMZI4. The CMZI4 may transmit the optical signal OS1 and the optical signal OS2 to the CMZI3 via the optical switch S2 and the CMZI2. The CMZI3 may split the optical signal OS1 and the optical signal OS2, transmit the split optical signal OS1 to the optical receiving submodule 22, and transmit the split optical signal OS2 to the optical receiving submodule 21. It can be learned that self-testing of the optical assembly 10 may be implemented in the loopback mode, to facilitate timely replacement of the optical assembly 10.

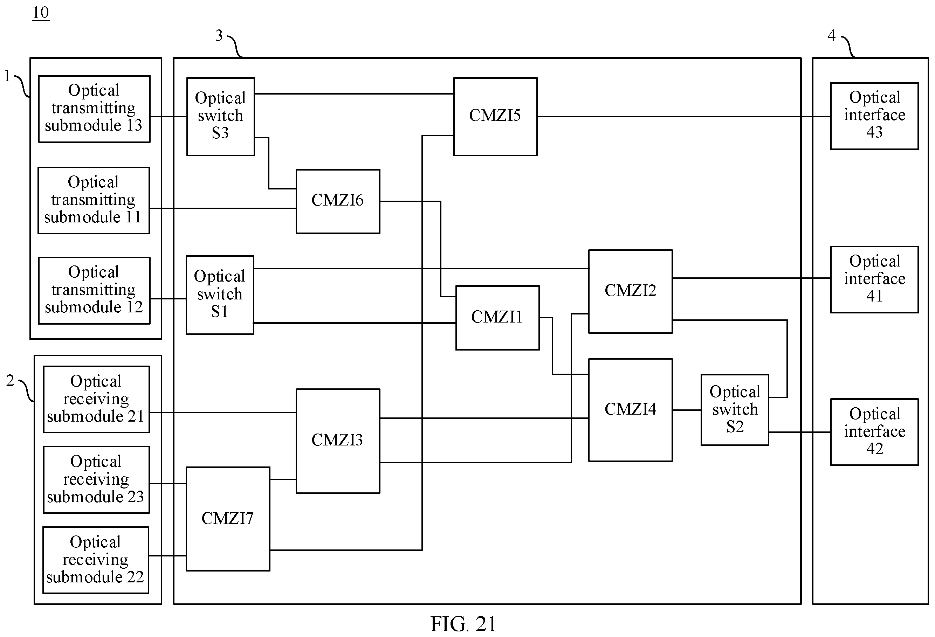

Based on FIG. 15, the optical transmitting module 1 may further include an optical transmitting submodule 13, the plurality of optical receiving submodules 2 may further include an optical receiving submodule 23, and the plurality of optical interfaces 4 may further include an optical interface 43, as shown in FIG. 21.

Refer to FIG. 21. The multiplexing module 3 may further include an optical switch S3, a CMZI5, a CMZI6, and a CMZI7.

A first port of the optical switch S3 may be connected to the optical transmitting submodule 13 and is configured to receive the optical signal OS5. A second port of the optical switch S3 may be connected to a first port of the CMZI5, and a third port of the optical switch S3 may be connected to a first port of the CMZI6. A second port of the CMZI5 may be connected to a fourth port of the CMZI7, and a third port of the CMZI5 may be connected to the optical interface 43. A second port of the CMZI6 may be connected to the optical transmitting submodule 11 and is configured to receive the optical signal OS5. A third port of the CMZI6 may be connected to the first port of the CMZI1. A first port of the CMZI7 may be connected to the optical receiving submodule 23 and is configured to transmit the optical signal OS6 to the optical receiving submodule 23. A second port of the CMZI7 may be connected to the optical receiving submodule 22 and is configured to transmit the optical signal OS4 to the optical receiving submodule 22. A third port of the CMZI7 may be connected to the second port of the CMZI3.

The optical assembly 10 shown in FIG. 21 may alternatively be used for CWDM networking or single-fiber bidirectional networking, or may be used as a transmit end or a receive end, or may operate in a loopback mode. Refer to FIG. 11 to FIG. 14. Details are not described in embodiments of this application.

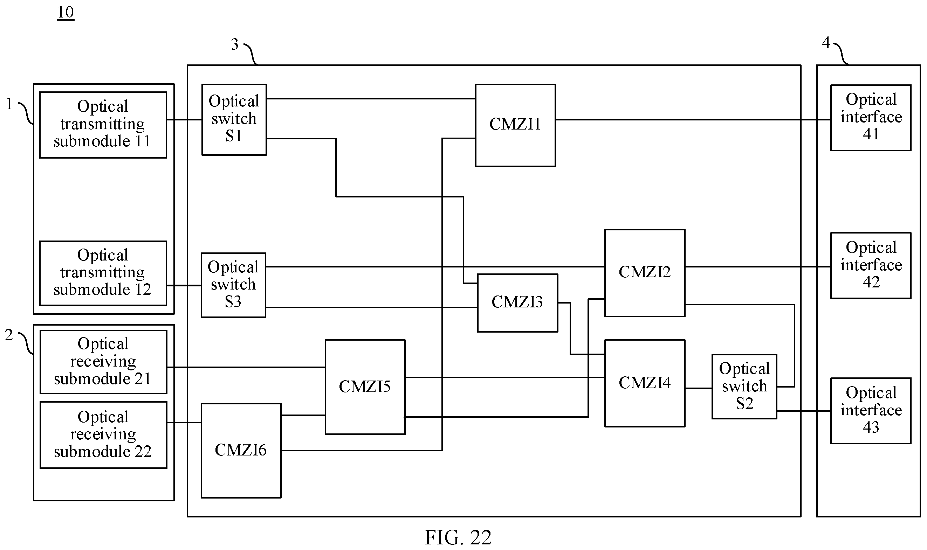

In some other embodiments, as shown in FIG. 22, the multiplexing module 3 may include an optical switch S1, an optical switch S2, an optical switch S3, a CMZI1, a CMZI2, a CMZI3, a CMZI4, a CMZI5, and a CMZI6.

A first port of the optical switch S1 may be connected to the optical transmitting submodule 11 and is configured to receive the optical signal OS1. A second port of the optical switch S1 may be connected to a first port of the CMZI1, and a third port of the optical switch S1 may be connected to a first port of the CMZI3. A second port of the CMZI1 may be connected to a fourth port of the CMZI6, and a third port of the CMZI1 may be connected to the optical interface 41.

A first port of the optical switch S3 may be connected to the optical transmitting submodule 12 and is configured to receive the optical signal OS2. A second port of the optical switch S3 may be connected to a first port of the CMZI2, and a third port of the optical switch S3 may be connected to a second port of the CMZI3. A second port of the CMZI2 may be connected to a fourth port of the CMZI5, a third port of the CMZI2 may be connected to the optical interface 42, and a fourth port of the CMZI2 may be connected to a second port of the optical switch S2. A third port of the CMZI3 may be connected to a first port of the CMZI4, a second port of the CMZI4 may be connected to a third port of the CMZI5, and a third port of the CMZI4 may be connected to a first port of the optical switch S2. A third port of the optical switch S2 may be connected to the optical interface 43. A first port of the CMZI5 may be connected to the optical receiving submodule 21 and is configured to transmit the optical signal OS3 to the optical receiving submodule 21. A second port of the CMZI5 may be connected to a second port of the CMZI6. A first port of the CMZI6 may be connected to the optical receiving submodule 22 and is configured to transmit the optical signal OS4 to the optical receiving submodule 22.

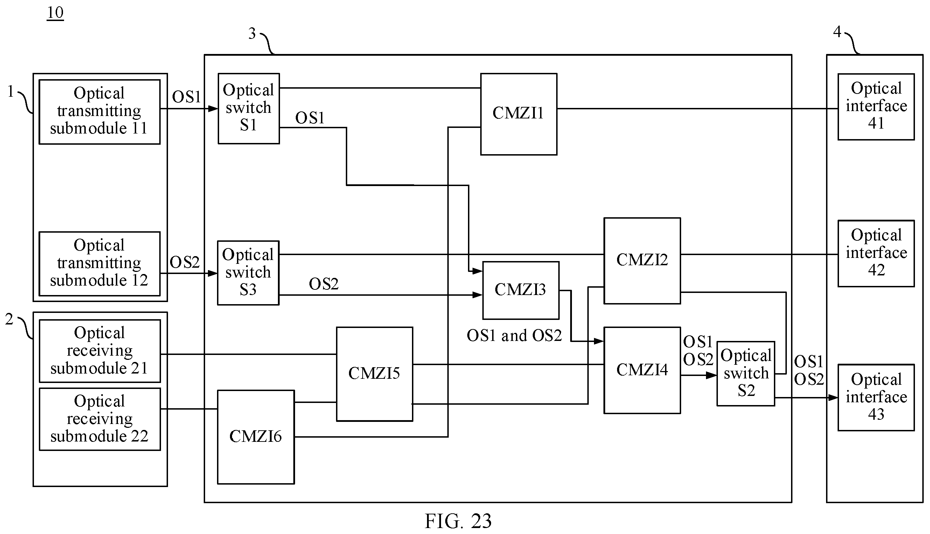

In an example, as shown in FIG. 23, when the optical assembly 10 is used for CWDM networking, and the optical assembly 10 is used as a transmit end, the optical switch S1 may transmit, to the CMZI3, the optical signal OS1 (which may have a wavelength of 1371 nm) output by the optical transmitting submodule 11. The optical switch S2 may transmit, to the CMZI3, the optical signal OS2 (which may have a wavelength of 1351 nm) output by the optical transmitting submodule 12. The CMZI3 may combine the optical signal OS1 and the optical signal OS2, and transmit the combined optical signal OS1 and optical signal OS2 to the CMZI4. The CMZI4 may transmit the optical signal OS1 and the optical signal OS2 to the optical interface 43 via the optical switch S2.

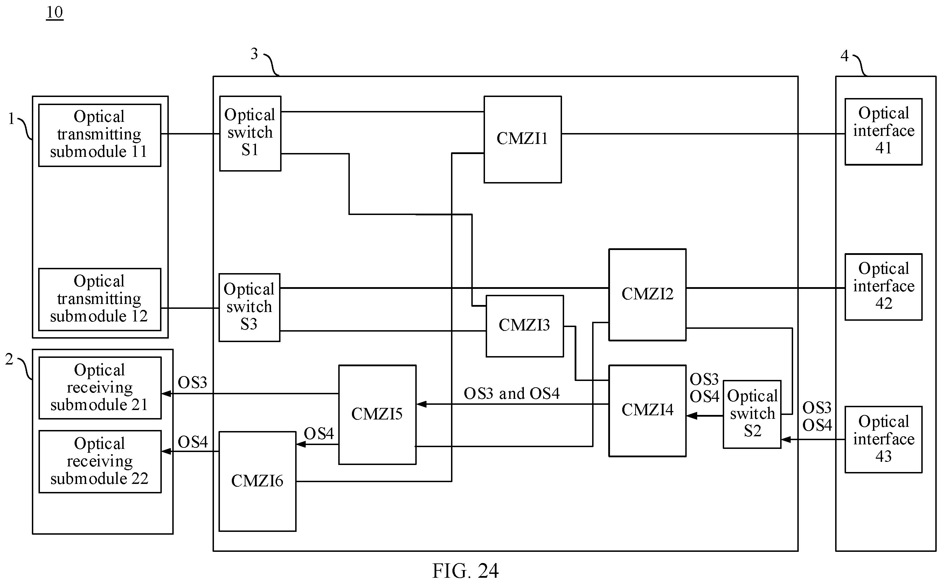

In another example, as shown in FIG. 24, when the optical assembly 10 is used for CWDM multiplexing networking, and the optical assembly 10 is used as a receive end, the optical switch S2 may transmit the optical signal OS3 (which may have a wavelength of 1291 nm) and the optical signal OS4 (which may have a wavelength of 1311 nm) to the CMZI5 via the CMZI4. The CMZI5 may split the optical signal OS3 and the optical signal OS4, transmit the split optical signal OS3 to the optical receiving submodule 21, and transmit the split optical signal OS4 to the optical receiving submodule 22.

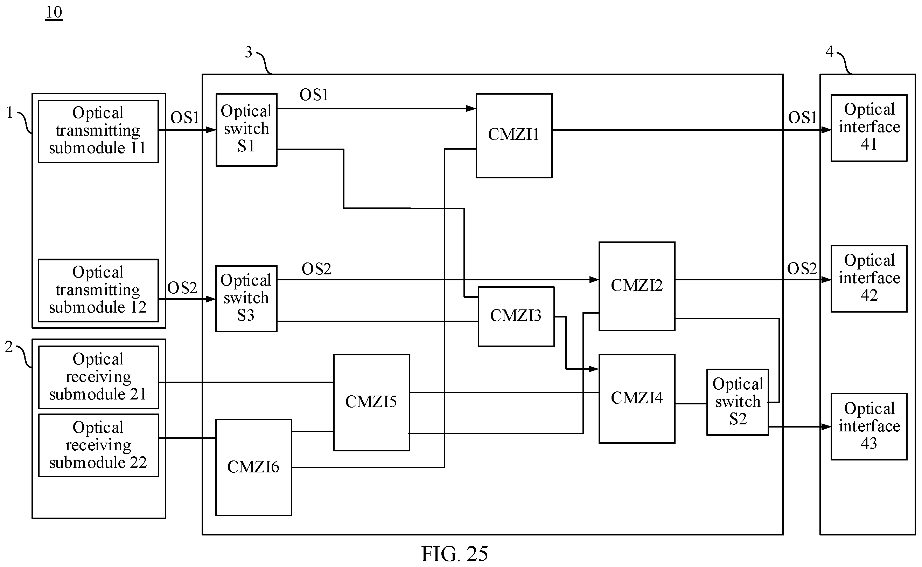

In still another example, as shown in FIG. 25, when the optical assembly 10 is used for single-fiber bidirectional networking, and the optical assembly 10 is used as a transmit end, the optical switch S1 may transmit, to the optical interface 41 via the CMZI1, the optical signal OS1 (which may have a wavelength of 1371 nm) output by the optical transmitting submodule 11. The optical switch S2 may transmit, to the optical interface 42 via the CMZI2, the optical signal OS2 (which may have a wavelength of 1351 nm) output by the optical transmitting submodule 12.

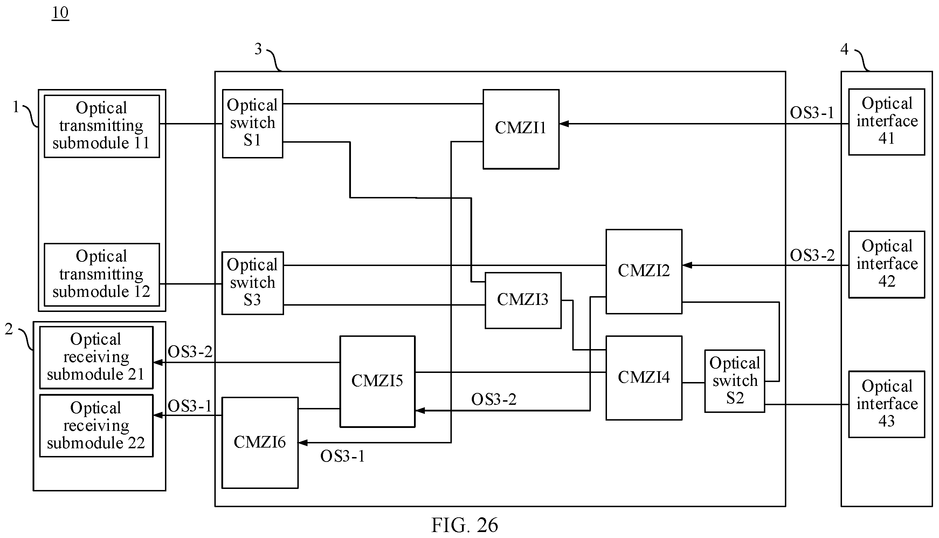

In still another example, as shown in FIG. 26, when the optical assembly 10 is used for single-fiber bidirectional networking, and the optical assembly 10 is used as a receive end, the optical interface 41 may transmit an optical signal OS3-1 (that is, a third optical signal which may have a wavelength of 1271 nm) to the CMZI6 via the CMZI1, and the CMZI6 may transmit the optical signal OS3-1 to the optical receiving submodule 22. The optical interface 42 may transmit another optical signal OS3-2 (that is, another third optical signal) to the CMZI5 via the CMZI2. The CMZI5 may transmit the optical signal OS3-2 to the optical receiving submodule 21.

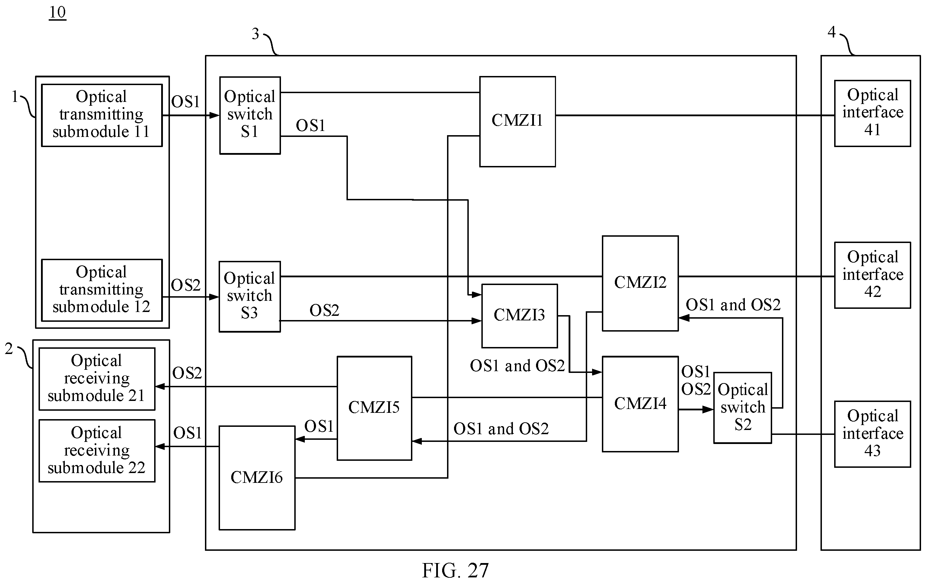

In still another example, as shown in FIG. 27, the optical assembly 10 may further operate in a loopback mode. The optical switch S1 may transmit, to the CMZI3, the optical signal OS1 (which may have a wavelength of 1371 nm) output by the optical transmitting submodule 11. The optical switch S3 may transmit, to the CMZI3, the optical signal OS2 (which may have a wavelength of 1351 nm) output by the optical transmitting submodule 12. The CMZI3 may combine the optical signal OS1 and the optical signal OS2, and transmit the combined optical signal OS1 and optical signal OS2 to the CMZI4. The CMZI4 may transmit the optical signal OS1 and the optical signal OS2 to the CMZI5 via the optical switch S2 and the CMZI2. The CMZI5 may split the optical signal OS1 and the optical signal OS2, and transmit the split optical signal OS1 to the optical receiving submodule 22 via the CMZI6. The CMZI5 further transmits the split optical signal OS2 to the optical receiving submodule 21. It can be learned that self-testing of the optical assembly 10 may be implemented in the loopback mode, to facilitate timely replacement of the optical assembly 10.

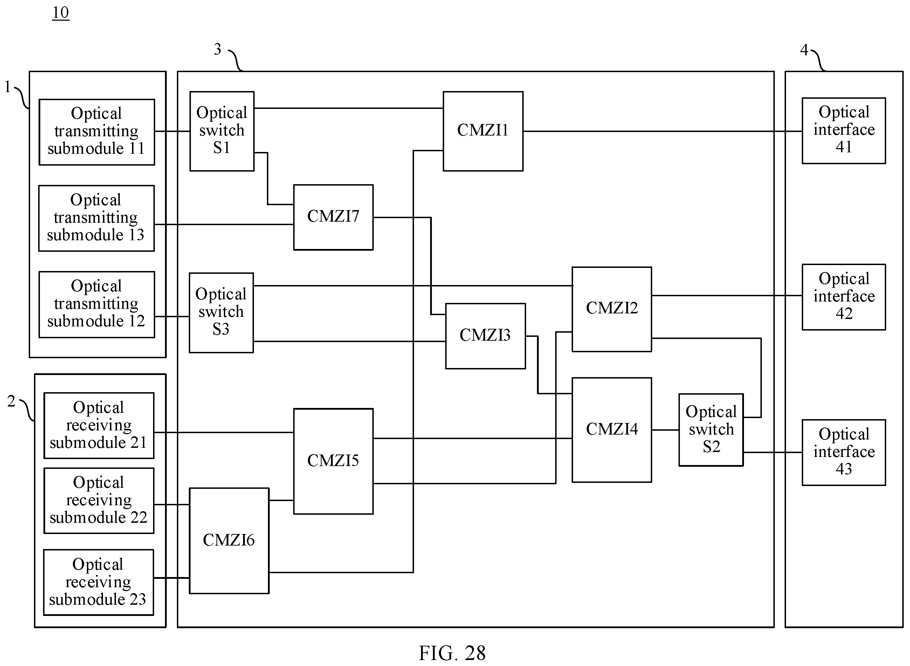

Based on FIG. 22, the optical transmitting module 1 may further include an optical transmitting submodule 13, the plurality of optical receiving submodules 2 may further include an optical receiving submodule 23, and the plurality of optical interfaces 4 may further include an optical interface 43, as shown in FIG. 28.

Refer to FIG. 28. The multiplexing module 3 may further include a CMZI7. A first port of the CMZI7 may be connected to the third port of the optical switch S1. A second port of the CMZI7 may be connected to the optical transmitting submodule 13 and is configured to receive the optical signal OS5. A third port of the CMZI7 may be connected to the first port of the CMZI3.

The optical assembly 10 shown in FIG. 28 may alternatively be used for CWDM networking or single-fiber bidirectional networking, or may be used as a transmit end or a receive end, or may operate in a loopback mode. Refer to FIG. 11 to FIG. 14. Details are not described in embodiments of this application.

Certainly, in addition to the structures described in FIG. 9, FIG. 21, and FIG. 28, the multiplexing module 3 may further have another structure to implement optical signal path switching. This is not limited in embodiments of this application.

An embodiment of this application further provides a chip. The chip may include the optical assembly 10 provided in the foregoing embodiments.

An embodiment of this application further provides an active antenna unit (active antenna unit, AAU). The AAU may include the chip. Certainly, the AAU may further include another part. Details are not described and this is not limited in embodiments of this application.

An embodiment of this application further provides a baseband unit (baseband unit, BBU). The BBU may include the chip. Certainly, the BBU may further include another part. Details are not described and this is not limited in embodiments of this application.

An embodiment of this application further provides a base station. The base station may include the AAU and the BBU. The AAU may be connected to the BBU.

Optionally, the AAU may be connected to the BBU through an optical fiber, to implement CWDM networking, single-fiber bidirectional networking, and dual-fiber bidirectional networking.

An embodiment of this application further provides a communication system. The communication system includes a terminal device, a communication network, and the base station. The terminal device is connected to the base station via the communication network.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical assembly, comprising an optical transmitting module, a plurality of optical receiving submodules, a multiplexing module, and a plurality of optical interfaces, wherein
the optical transmitting module is configured to output a first optical signal and a second optical signal to the multiplexing module;
the multiplexing module is configured to perform path switching for the first optical signal and the second optical signal, and transmit the first optical signal and the second optical signal to at least one of the plurality of optical interfaces;
any one of the plurality of optical interfaces is configured to output the first optical signal and/or the second optical signal, or is configured to receive a third optical signal and/or a fourth optical signal and transmit the third optical signal and/or the fourth optical signal to the multiplexing module; and
the multiplexing module is further configured to: perform path switching for the third optical signal and transmit the third optical signal to a first optical receiving submodule in the plurality of optical receiving submodules; and perform path switching for the fourth optical signal and transmit the fourth optical signal to a second optical receiving submodule in the plurality of optical receiving submodules.

2. The optical assembly according to claim 1, wherein
the optical transmitting module is further configured to output a fifth optical signal to the multiplexing module;
the multiplexing module is further configured to perform path switching for the fifth optical signal and transmit the fifth optical signal to at least one of the plurality of optical interfaces;
any one of the plurality of optical interfaces is further configured to output the fifth optical signal, or is configured to receive a sixth optical signal and transmit the sixth optical signal to the multiplexing module; and
the multiplexing module is further configured to perform path switching for the sixth optical signal and transmit the sixth optical signal to a third optical receiving submodule in the plurality of optical receiving submodules.

3. The optical assembly according to claim 2, wherein the multiplexing module comprises a first optical switch, a second optical switch, a first optical interferometer, a second optical interferometer, a third optical interferometer, a fourth optical interferometer, and a fifth optical interferometer, wherein
a first port of the first optical switch is connected to a first optical transmitting submodule of the optical transmitting module and is configured to receive the first optical signal, a second port of the first optical switch is connected to a first port of the first optical interferometer, a third port of the first optical switch is connected to a first port of the second optical interferometer, a second port of the first optical interferometer is connected to a fourth port of the fourth optical interferometer, a third port of the first optical interferometer is connected to a first optical interface in the plurality of optical interfaces, a second port of the second optical interferometer is connected to a second optical transmitting submodule of the optical transmitting module and is configured to receive the second optical signal, a third port of the second optical interferometer is connected to a first port of the fifth optical interferometer, a first port of the fourth optical interferometer is connected to the first optical receiving submodule and is configured to transmit the third optical signal to the first optical receiving submodule, a second port of the fourth optical interferometer is connected to the second optical receiving submodule and is configured to transmit the fourth optical signal to the second optical receiving submodule, a third port of the fourth optical interferometer is connected to a first port of the third optical interferometer, a second port of the third optical interferometer is connected to a second port of the fifth optical interferometer, a third port of the third optical interferometer is connected to a second port of the second optical switch, a third port of the fifth optical interferometer is connected to a first port of the second optical switch, and a third port of the second optical switch is connected to a second optical interface in the plurality of optical interfaces.

4. The optical assembly according to claim 3, wherein the multiplexing module further comprises a third optical switch, a sixth optical interferometer, and a seventh optical interferometer, wherein
a first port of the third optical switch is connected to a third optical transmitting submodule of the optical transmitting module and is configured to receive the fifth optical signal, a second port of the third optical switch is connected to a first port of the seventh optical interferometer, a third port of the third optical switch is connected to a second port of the sixth optical interferometer, a first port of the sixth optical interferometer is connected to the third port of the second optical interferometer, a third port of the sixth optical interferometer is connected to the first port of the fifth optical interferometer, a second port of the seventh optical interferometer is connected to the third port of the third optical interferometer, a third port of the seventh optical interferometer is connected to a third optical interface in the plurality of optical interfaces, a fourth port of the seventh optical interferometer is connected to the second port of the second optical switch, and a fourth port of the third optical interferometer is connected to the third optical receiving submodule and is configured to transmit the sixth optical signal to the third optical receiving submodule.

5. The optical assembly according to claim 2, wherein the multiplexing module comprises a first optical switch, a second optical switch, a first optical interferometer, a second optical interferometer, a third optical interferometer, and a fourth optical interferometer, wherein
a first port of the first optical switch is connected to a second optical transmitting submodule of the optical transmitting module and is configured to receive the second optical signal, a second port of the first optical switch is connected to a first port of the second optical interferometer, a third port of the first optical switch is connected to a second port of the first optical interferometer, a first port of the first optical interferometer is connected to a first optical transmitting submodule of the optical transmitting module and is configured to receive the first optical signal, a third port of the first optical interferometer is connected to a first port of the fourth optical interferometer, a second port of the second optical interferometer is connected to a fourth port of the third optical interferometer, a third port of the second optical interferometer is connected to a first optical interface in the plurality of optical interfaces, a fourth port of the second optical interferometer is connected to a second port of the second optical switch, a first port of the third optical interferometer is connected to the first optical receiving submodule and is configured to transmit the third optical signal to the first optical receiving submodule, a second port of the third optical interferometer is connected to the second optical receiving submodule and is configured to transmit the fourth optical signal to the second optical receiving submodule, a third port of the third optical interferometer is connected to a second port of the fourth optical interferometer, a third port of the fourth optical interferometer is connected to a first port of the second optical switch, and a third port of the second optical switch is connected to a second optical interface in the plurality of optical interfaces.

6. The optical assembly according to claim 5, wherein the multiplexing module further comprises a third optical switch, a fifth optical interferometer, a sixth optical interferometer, and a seventh optical interferometer, wherein
a first port of the third optical switch is connected to a third optical transmitting submodule of the optical transmitting module and is configured to receive the fifth optical signal, a second port of the third optical switch is connected to a first port of the fifth optical interferometer, a third port of the third optical switch is connected to a first port of the sixth optical interferometer, a second port of the fifth optical interferometer is connected to a fourth port of the seventh optical interferometer, a third port of the fifth optical interferometer is connected to a third optical interface in the plurality of optical interfaces, a second port of the sixth optical interferometer is connected to the first optical transmitting submodule of the optical transmitting module and is configured to receive the first optical signal, a third port of the sixth optical interferometer is connected to the first port of the first optical interferometer, a first port of the seventh optical interferometer is connected to the third optical receiving submodule and is configured to transmit the sixth optical signal to the third optical receiving submodule, a second port of the seventh optical interferometer is connected to the second optical receiving submodule and is configured to transmit the fourth optical signal to the second optical receiving submodule, and a third port of the seventh optical interferometer is connected to the second port of the third optical interferometer.

7. The optical assembly according to claim 2, wherein the multiplexing module comprises a first optical switch, a second optical switch, a third optical switch, a first optical interferometer, a second optical interferometer, a third optical interferometer, a fourth optical interferometer, a fifth optical interferometer, and a sixth optical interferometer, wherein
a first port of the first optical switch is connected to a first optical transmitting submodule of the optical transmitting module and is configured to receive the first optical signal, a second port of the first optical switch is connected to a first port of the first optical interferometer, a third port of the first optical switch is connected to a first port of the third optical interferometer, a second port of the first optical interferometer is connected to a fourth port of the sixth optical interferometer, and a third port of the first optical interferometer is connected to a first optical interface in the plurality of optical interfaces; and
a first port of the third optical switch is connected to a second optical transmitting submodule of the optical transmitting module and is configured to receive the second optical signal, a second port of the third optical switch is connected to a first port of the second optical interferometer, a third port of the third optical switch is connected to a second port of the third optical interferometer, a second port of the second optical interferometer is connected to a fourth port of the fifth optical interferometer, a third port of the second optical interferometer is connected to a second optical interface in the plurality of optical interfaces, a fourth port of the second optical interferometer is connected to a second port of the second optical switch, a third port of the third optical interferometer is connected to a first port of the fourth optical interferometer, a second port of the fourth optical interferometer is connected to a third port of the fifth optical interferometer, a third port of the fourth optical interferometer is connected to a first port of the second optical switch, a third port of the second optical switch is connected to a third optical interface in the plurality of optical interfaces, a first port of the fifth optical interferometer is connected to the first optical receiving submodule and is configured to transmit the third optical signal to the first optical receiving submodule, a second port of the fifth optical interferometer is connected to a second port of the sixth optical interferometer, and a first port of the sixth optical interferometer is connected to the second optical receiving submodule and is configured to transmit the fourth optical signal to the second optical receiving submodule.

8. The optical assembly according to claim 7, wherein the multiplexing module further comprises a seventh optical interferometer, wherein
a first port of the seventh optical interferometer is connected to the third port of the first optical switch, a second port of the seventh optical interferometer is connected to a third optical transmitting submodule of the optical transmitting module and is configured to receive the fifth optical signal, and a third port of the seventh optical interferometer is connected to the first port of the third optical interferometer.

9. The optical assembly according to any one of claims 2 to 8, wherein a first wavelength of the first optical signal, a second wavelength of the second optical signal, a fifth wavelength of the fifth optical signal, and a third wavelength of the third optical signal are different from one another;
the first wavelength, the second wavelength, the fifth wavelength, and a fourth wavelength of the fourth optical signal are different from one another; and
the first wavelength, the second wavelength, the fifth wavelength, and a sixth wavelength of the sixth optical signal are different from one another.

10. A chip, comprising the optical assembly according to any one of claims 1 to 9.

11. An active antenna unit, comprising the chip according to claim 10.

12. A baseband unit, comprising the chip according to claim 10.

13. A base station, comprising the active antenna unit according to claim 11 and the baseband unit according to claim 12, wherein the active antenna unit is connected to the baseband unit.

14. A communication system, comprising a terminal device, a communication network, and the base station according to claim 13, wherein the terminal device is connected to the base station via the communication network.
